# EUROPEAN PATENT APPLICATION

(11) **EP 4 682 199 A1**
(43) Date of publication of application: **21.01.2026**
(21) Application number: 25775204.8
(22) Date of filing: 27.03.2025
(51) Int. Cl.: C08L 23/00, B64G 1/58, C08L 27/04, C09K 3/10, F16J 15/10, F16L 9/127, H01L 21/02

(54) **MEMBER, AND SEMICONDUCTOR MANUFACTURING?RELATED DEVICE**

(30) Priority: 28.03.2024 JP 2024053732; 03.10.2024 JP 2024174287
(71) Applicant: Daikin Industries, Ltd., Osaka-shi, Osaka 530-0001 (JP)
(72) Inventor: OKUNO, Shingo, Osaka-Shi, Osaka 530-0001 (JP); TANAKA, Yuhei, Osaka-Shi, Osaka 530-0001 (JP)
(74) Representative: Hoffmann Eitle
(86) International application number: PCT/JP2025/012517
(87) International publication number: WO 2025/206203

(57) **Abstract**

The disclosure provides a member excellent in corrosion resistance and a semiconductor manufacturing-related apparatus using the member. Provided is a member containing at least one thermoplastic resin selected from the group consisting of a polyolefin resin and a chlorine-based resin. The member includes at least one selected from the group consisting of an architectural finishing material member, a mobility member, an aerospace member, a semiconductor member, and an information and communication member. The member comes into contact with a corrosive substance.

## Description

### TECHNICAL FIELD

The disclosure relates to members and semiconductor manufacturing-related apparatuses.

### BACKGROUND ART

Use of polyethylene that meets certain requirements for high-purity chemical containers has been proposed (see Patent Literature 1, for example).

### CITATION LIST

### - Patent Literature

Patent Literature 1: JP H10-17729 A

### SUMMARY OF INVENTION

### - Technical Problem

The disclosure aims to provide a member excellent in corrosion resistance and a semiconductor manufacturing-related apparatus using the member.

### - Solution to Problem

The disclosure (1) relates to a member containing at least one thermoplastic resin selected from the group consisting of a polyolefin resin and a chlorine-based resin,
the member including at least one selected from the group consisting of an architectural finishing material member, a mobility member, an aerospace member, a semiconductor member, and an information and communication member,
the member coming into contact with a corrosive substance.

The disclosure (2) relates to the member according to the disclosure (1), wherein the thermoplastic resin has crystallinity.

The disclosure (3) relates to the member according to the disclosure (1) or (2), wherein the polyolefin resin includes at least one selected from the group consisting of a polyethylene resin, a polypropylene resin, an amorphous cycloolefin resin, a crystalline cycloolefin resin, and a polymethylpentene resin.

The disclosure (4) relates to the member according to any one of the disclosures (1) to (3), wherein the chlorine-based resin includes at least one selected from the group consisting of a vinyl chloride resin, a chlorinated vinyl chloride resin, and a chlorinated polyethylene resin.

The disclosure (5) relates to the member according to any one of the disclosures (1) to (4), wherein the thermoplastic resin includes at least one selected from the group consisting of a polyethylene resin, a polypropylene resin, an amorphous cycloolefin resin, a crystalline cycloolefin resin, a polymethylpentene resin, and a vinyl chloride resin.

The disclosure (6) relates to the member according to any one of the disclosures (1) to (4), wherein the thermoplastic resin includes at least one selected from the group consisting of a polypropylene resin, an amorphous cycloolefin resin, a crystalline cycloolefin resin, and a polymethylpentene resin.

The disclosure (7) relates to the member according to any one of the disclosures (1) to (6), wherein the member includes at least one selected from the group consisting of a container, a piping material, a nozzle, a tube, a tank, a fitting, a valve, a pump, a spin chuck, an O-ring, a packing, a gasket, a washer, and a sealing material.

The disclosure (8) relates to the member according to any one of the disclosures (1) to (7), wherein the thermoplastic resin includes at least one selected from the group consisting of a polypropylene resin, an amorphous cycloolefin resin, a crystalline cycloolefin resin, and a polymethylpentene resin, and the member includes at least one selected from the group consisting of a container, a piping material, a nozzle, a tube, a tank, a fitting, a valve, a pump, a spin chuck, an O-ring, a packing, a gasket, a washer, and a sealing material.

The disclosure (9) relates to the member according to any one of the disclosures (1) to (8), wherein the corrosive substance has a pH of 6 or lower or 8 or higher.

The disclosure (10) relates to the member according to any one of the disclosures (1) to (9), wherein the corrosive substance has a redox potential (vs. NHE) of -2.0 to 3.0 V.

The disclosure (11) relates to the member according to any one of the disclosures (1) to (10), wherein the corrosive substance includes at least one selected from the group consisting of an acidic substance, a basic substance, an oxidizing substance, an organic solvent, and salt water.

The disclosure (12) relates to the member according to the disclosure (11), wherein the acidic substance includes at least one selected from the group consisting of sulfuric acid, hydrofluoric acid, nitric acid, phosphoric acid, hydrochloric acid, a mixed acid of hydrofluoric acid and nitric acid, a mixed chemical solution of hydrogen peroxide water and hydrochloric acid, and a mixed chemical solution of hydrogen peroxide water and sulfuric acid.

The disclosure (13) relates to the member according to the disclosure (11) or (12), wherein the basic substance includes at least one selected from the group consisting of TMAH ([(CH₃)₄N]⁺[OH]⁻), an aqueous sodium hydroxide solution, ammonia water, and a mixed chemical solution of hydrogen peroxide water and ammonia water.

The disclosure (14) relates to the member according to any one of the disclosures (1) to (13), wherein the corrosive substance includes at least one selected from the group consisting of sulfuric acid, hydrofluoric acid, nitric acid, phosphoric acid, hydrochloric acid, a mixed acid of hydrofluoric acid and nitric acid, a mixed chemical solution of hydrogen peroxide water and hydrochloric acid, a mixed chemical solution of hydrogen peroxide water and sulfuric acid, TMAH ([(CH₃)₄N]⁺[OH]⁻), an aqueous sodium hydroxide solution, a mixed chemical solution of hydrogen peroxide water and ammonia water, and isopropyl alcohol.

The disclosure (15) relates to the member according to any one of the disclosures (1) to (14), wherein the member is for a semiconductor manufacturing-related apparatus.

The disclosure (16) relates to the member according to the disclosure (15), wherein the semiconductor manufacturing-related apparatus is an apparatus in which a chemical is used.

The disclosure (17) relates to the member according to any one of the disclosures (1) to (16), wherein when a test piece (size: 10 mm × 50 mm × 2 mm) including the member is immersed in each of the following three chemical solutions for one week, a relative value of a mass of the test piece after the immersion, with a mass before the immersion taken as 100, is 95 or more and 105 or less for all the three chemical solutions:

### (chemical solutions)

25% by mass TMAH ([(CH₃)₄N]⁺[OH]⁻) (80°C);
a mixed acid of hydrofluoric acid and nitric acid (a mixture of 49% by mass hydrofluoric acid and 69 to 71% by mass nitric acid in a volume ratio of 1:100) (20°C); and
SPM (a mixture of 98% by mass sulfuric acid and 30 to 36% by mass hydrogen peroxide water in a volume ratio of 2:1) (80°C).

The disclosure (18) relates to the member according to any one of the disclosures (1) to (17), wherein when a test piece (size: 10 mm × 50 mm × 2 mm) including the member is immersed in each of the following 10 chemical solutions for one week and a relative value of a mass of the test piece after the immersion, with a mass before the immersion taken as 100, is measured for each chemical solution, an average of the relative values for the 10 chemical solutions is 95 or more and 105 or less, and a standard deviation thereof is 20 or less:

### (chemical solutions)

25% by mass TMAH ([(CH₃)₄N]⁺[OH]⁻) (80°C);
98% by mass sulfuric acid (90°C);
100% by mass isopropyl alcohol (80°C);
49% by mass hydrofluoric acid (70°C);
a mixed acid of hydrofluoric acid and nitric acid (a mixture of 49% by mass hydrofluoric acid and 69 to 71% by mass nitric acid in a volume ratio of 1:5) (20°C);
a mixed acid of hydrofluoric acid and nitric acid (a mixture of 49% by mass hydrofluoric acid and 69 to 71% by mass nitric acid in a volume ratio of 1:100) (20°C);
SPM (a mixture of 98% by mass sulfuric acid and 30 to 36% by mass hydrogen peroxide water in a volume ratio of 2:1) (80°C);
SC1 (a mixture of 25 to 28% by mass ammonia water, 30 to 36% by mass hydrogen peroxide water, and deionized water in a volume ratio of 1:1:5) (70°C);
SC2 (a mixture of 35 to 37% by mass hydrochloric acid, 30 to 36% by mass hydrogen peroxide water, and deionized water in a volume ratio of 1:1:4) (70°C); and
85% by mass phosphoric acid (80°C).

The disclosure (19) relates to the member according to any one of the disclosures (1) to (18), wherein the member has a deflection temperature under load of 50°C or higher at a load of 1.82 MPa.

The disclosure (20) relates to the member according to any one of the disclosures (1) to (19), wherein when a test piece (size: 10 mm × 50 mm × 2 mm) including the member is immersed in 3.6% by mass hydrochloric acid at 23°C for one week, an elution amount of each of 16 metal elements (Li, Na, Mg, Al, K, Ca, Ti, Cr, Mn, Fe, Ni, Cu, Zn, Ag, Cd, and Pb) is 20 ppb or less.

The disclosure (21) relates to a semiconductor manufacturing-related apparatus including the member according to any one of the disclosures (1) to (20) mounted thereon.

The disclosure (22) relates to the semiconductor manufacturing-related apparatus according to the disclosure (21), which includes at least one selected from the group consisting of a semiconductor manufacturing apparatus and a semiconductor manufacturing apparatus-related apparatus.

The disclosure (23) relates to the semiconductor manufacturing-related apparatus according to the disclosure (22), wherein the semiconductor manufacturing apparatus includes at least one selected from the group consisting of a photolithography process apparatus, a thin film formation/etching/cleaning/drying apparatus, an inspection/evaluation and manufacturing apparatus, a resist processing apparatus, an etching apparatus, a cleaning/drying apparatus, a CVD apparatus, a thin film formation apparatus, a CMP apparatus, a processing apparatus, an aging apparatus, and an inspection apparatus; and
the semiconductor manufacturing apparatus-related apparatus includes at least one selected from the group consisting of a pure water/chemical liquid apparatus, a gas apparatus, a clean room apparatus, and a manufacturing-related apparatus.

The disclosure (24) relates to the semiconductor manufacturing-related apparatus according to the disclosure (23), wherein the photolithography process apparatus includes at least one selected from the group consisting of a coating apparatus, a resist stripping apparatus, a developing apparatus (developer), and a descumming apparatus;
the thin film formation/etching/cleaning/drying apparatus includes at least one selected from the group consisting of a vacuum deposition apparatus, a cleaning apparatus, a drying apparatus, and a scrub cleaning apparatus;
the inspection/evaluation and manufacturing apparatus is a defect repair apparatus,
the resist processing apparatus includes at least one selected from the group consisting of a coating apparatus, a developing apparatus, a resist stripping apparatus, and an ashing apparatus;
the etching apparatus includes at least one selected from the group consisting of a dry etching apparatus and a wet etching apparatus;
the cleaning/drying apparatus includes at least one selected from the group consisting of a wet cleaning apparatus, a scrub cleaning apparatus, and a drying apparatus;
the CVD apparatus includes at least one selected from the group consisting of a high-pressure CVD apparatus, a SACVD apparatus, a low-pressure CVD apparatus, a plasma CVD apparatus, a metal CVD apparatus, and an ALD apparatus;
the thin film formation apparatus includes at least one selected from the group consisting of a vacuum deposition apparatus, a silicon epitaxial growth apparatus, a compound semiconductor epitaxial apparatus (MOCVD apparatus, MBE apparatus), and a plating apparatus;
the CMP apparatus includes at least one selected from the group consisting of a CMP apparatus and a CMP cleaning apparatus;
the processing apparatus is a bump plating apparatus;
the aging apparatus includes at least one selected from the group consisting of an aging apparatus, a burn-in apparatus, an IC insertion apparatus, and an IC extraction apparatus;
the inspection apparatus is a life test apparatus,
the pure water/chemical liquid apparatus includes at least one selected from the group consisting of a chemical supply apparatus, a slurry supply apparatus, a chemical purification apparatus, and a waste liquid treatment apparatus;
the gas apparatus includes at least one selected from the group consisting of a gas generation apparatus, a gas purification apparatus, a gas mixing apparatus, a gas detection apparatus, and an exhaust gas treatment apparatus;
the clean room apparatus includes at least one selected from the group consisting of a thermal chamber and an environmental test apparatus; and
the manufacturing-related apparatus includes at least one selected from the group consisting of a jig cleaning/drying apparatus, a flow control instrument, a packaging apparatus, and a liquid/gas measuring instrument.

### - Advantageous Effects of Invention

The disclosure can provide a member excellent in corrosion resistance and a semiconductor manufacturing-related apparatus using the member.

### DESCRIPTION OF EMBODIMENTS

The disclosure will be specifically described hereinbelow.

The disclosure relates to a member containing at least one thermoplastic resin selected from the group consisting of a polyolefin resin and a chlorine-based resin. The member includes at least one selected from the group consisting of an architectural finishing material member, a mobility member, an aerospace member, a semiconductor member, and an information and communication member. The member comes into contact with a corrosive substance.

The member of the disclosure has excellent corrosion resistance (in particular, excellent chemical resistance).

The member of the disclosure is also excellent in heat resistance and can reduce or prevent metal elution.

The member of the disclosure contains at least one thermoplastic resin selected from the group consisting of a polyolefin resin and a chlorine-based resin. In terms of heat resistance, the member of the disclosure preferably includes a polyolefin resin.

The thermoplastic resin may be crystalline or amorphous. In terms of corrosion resistance and heat resistance, the thermoplastic resin preferably has crystallinity.

When the thermoplastic resin is a crystalline resin, the melting point is preferably 100°C or higher, more preferably 120°C or higher, still more preferably 150°C or higher, particularly preferably 180°C or higher in order to further improve the corrosion resistance and heat resistance. The melting point is preferably 350°C or lower, more preferably 320°C or lower.

The melting point of a thermoplastic resin is the temperature corresponding to the maximum value on a heat-of-fusion curve obtained at a temperature-increasing rate of 10°C/min using a differential scanning calorimeter (DSC).

When the thermoplastic resin is a crystalline resin, the glass transition temperature is preferably -130°C or higher, more preferably -10°C or higher, still more preferably 5°C or higher, while it is preferably 300°C or lower, more preferably 250°C or lower, still more preferably 200°C or lower, further preferably 100°C or lower, in order to further improve the corrosion resistance and heat resistance.

When the thermoplastic resin is an amorphous resin, the glass transition temperature is preferably 60°C or higher, more preferably 100°C or higher, still more preferably 120°C or higher, while it is preferably 300°C or lower, more preferably 250°C or lower, still more preferably 200°C or lower in order to further improve the corrosion resistance and heat resistance.

The glass transition temperature of a thermoplastic resin is measured under a condition of a temperature-increasing rate of 10°C/min using a differential scanning calorimeter (DSC) in conformity with JIS K 7121.

In order to further improve the corrosion resistance and heat resistance, the thermoplastic resin preferably has a heat of fusion of 1 J/g or more, more preferably 5 J/g or more, still more preferably 10 J/g or more, further preferably 30 J/g or more, particularly preferably 40 J/g or more, while preferably 300 J/g or less, more preferably 150 J/g or less, still more preferably 120 J/g or less, further preferably 100 J/g or less, particularly preferably 90 J/g or less.

The heat of fusion of a thermoplastic resin can be measured under a condition of a temperature-increasing rate of 10°C/min using a differential scanning calorimeter (DSC).

In terms of corrosion resistance, the thermoplastic resin preferably has a density of 1.50 g/m³ or less, more preferably 1.10 g/m³ or less, while preferably 0.80 g/m³ or more.

The density of a thermoplastic resin is measured in conformity with JIS K 7112.

Examples of the polyolefin resin include a polyethylene resin, a polypropylene resin, an ethylene/propylene copolymer resin, an amorphous cycloolefin resin, a crystalline cycloolefin resin, a polymethylpentene resin, an amorphous polystyrene resin, a crystalline polystyrene resin, and a polybutylene resin. One or two or more of these can be used.

From the viewpoint of corrosion resistance, the polyolefin resin preferably includes at least one selected from the group consisting of a polyethylene resin, a polypropylene resin, an amorphous cycloolefin resin, a crystalline cycloolefin resin, and a polymethylpentene resin. From the viewpoint of heat resistance, the polyolefin resin more preferably includes at least one selected from the group consisting of a polypropylene resin, an amorphous cycloolefin resin, a crystalline cycloolefin resin, and a polymethylpentene resin, still more preferably at least one selected from the group consisting of an amorphous cycloolefin resin, a crystalline cycloolefin resin, and a polymethylpentene resin.

The polyethylene resin may be an ethylene homopolymer and/or an ethylene/α-olefin copolymer. In the case of an ethylene/α-olefin copolymer, the α-olefin is preferably a C3-C20 α-olefin, more preferably C3-C18 α-olefin, still more preferably a C3-C12 α-olefin.

Specific examples of the α-olefin include propylene, 1-butene, 1-hexene, 1-octene, 4-methyl-1-pentene, 3-methyl-1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, and 1-eicosene. One or two or more of these can be used.

Preferred among these are 1-butene and 1-hexene.

An ethylene/diene copolymer can also be used as the polyethylene resin. Examples of diene compounds used here include butadiene, 1,4-hexadiene, ethylidene norbornene, and dicyclopentadiene. One or two or more of these can be used.

The proportion of the comonomer such as an α-olefin or a diene is preferably 40 mol% or less, more preferably 30 mol% or less, still more preferably 20 mol% or less, further preferably 10 mol% or less, particularly preferably 5.0 mol% or less, while it may be 0 mol% or more or 0.001 mol% or more.

The polyethylene resin (other than the later-described ultra high molecular weight polyethylene) may have any melt flow rate (MFR). From the viewpoint of the appearance of the molded article to be obtained, the polyethylene resin used, for example, in blow molding preferably has a MFR of 0.03 g/10 min or more, more preferably 0.1 g/10 min or more, still more preferably 0.2 g/10 min or more, while preferably 3 g/10 min or less, more preferably 2 g/10 min or less, still more preferably 1.5 g/10 min or less, further preferably 1 g/10 min or less, particularly preferably 0.5 g/10 min or less as measured at 190°C under a load of 2.16 kg.

The polyethylene resin (other than the later-described ultra high molecular weight polyethylene) used in extrusion molding preferably has a MFR of 0.01 g/10 min or more, more preferably 0.1 g/10 min or more, while preferably 5 g/10 min or less, more preferably 4.5 g/10 min or less, still more preferably 4 g/10 min or less.

The polyethylene resin (other than the later-described ultra high molecular weight polyethylene) used in injection molding preferably has a MFR of 1 g/10 min or more, more preferably 3 g/10 min or more, still more preferably 5 g/10 min or more, further preferably 10 g/10 min or more, particularly preferably 20 g/10 min or more, while preferably 300 g/10 min or less, more preferably 200 g/10 min or less, still more preferably 100 g/10 min or less, further preferably 90 g/10 min or less, particularly preferably 80 g/10 min or less.

The MFR is measured at 190°C under a load of 2.16 kg in conformity with JIS K 6922-2:1997.

The MFR of the polyethylene resin can be adjusted, for example, by controlling the ethylene polymerization temperature or using a chain transfer agent. For example, increasing the polymerization temperature of ethylene and an α-olefin can reduce the molecular weight, increasing the MFR. Lowering the polymerization temperature can increase the molecular weight, decreasing the MFR. Increasing the amount of hydrogen to coexist (amount of a chain transfer agent) in the copolymerization reaction of ethylene and an α-olefin can reduce the molecular weight, increasing the MFR. Decreasing the amount of hydrogen to coexist (amount of a chain transfer agent) can increase the molecular weight, decreasing the MFR.

The polyethylene resin preferably has a density of 0.900 to 0.980 g/cm^{3.} The density is more preferably 0.910 g/cm³ or more, still more preferably 0.920 g/cm³ or more, further preferably 0.930 g/cm³ or more, particularly preferably 0.932 g/cm³ or more, while it is more preferably 0.970 g/cm³ or less, still more preferably 0.960 g/cm³ or less, further preferably 0.950 g/cm³ or less, particularly preferably 0.948 g/cm³ or less.

The density is measured in conformity with JIS K 6922-1,2:1997.

The density can be adjusted by varying the type or amount of the α-olefin to be copolymerized with ethylene.

The polyethylene resin can be produced by a known method with no limitation on, for example, a production catalyst to be used or process. The raw material monomer may be derived from a petroleum raw material, a biomass raw material, or both.

The polymerization catalyst used may be a conventionally known catalyst such as a metal catalyst (e.g., Ziegler-Natta catalyst, Phyllips catalyst, metallocene catalyst). Generally, these catalysts are in the form of a complex composed of an organometallic compound supported on a carrier such as silica or a magnesium compound.

The polymerization method may be any of a high-pressure method, a solution method, a slurry method, and a vapor-phase method.

The high-pressure method refers to a polymerization method in which ethylene, a comonomer, and an initiator are introduced into a reaction vessel, and polymerization is carried out under high-temperature and high-pressure conditions using a radical-generating source such as oxygen or a peroxide, or a catalyst containing a metal complex as the initiator. The high-pressure method can be further classified to a tubular method and an autoclave method depending on the shape of the reaction vessel.

The solution method refers to a polymerization method in which polymerization is carried out in a state where the formed polymer dissolves in a hydrocarbon solvent at a temperature equal to or higher than the melting point of the polymer.

The slurry method refers to a polymerization method in which a hydrocarbon compound is used as a solvent and the formed polyethylene is present in the form of a slurry in the solvent. The slurry method is further classified to an autoclave method and a loop-pipe method depending on the shape of the reaction vessel. The solvent is preferably an inert hydrocarbon solvent selected from aliphatic hydrocarbons such as hexane and heptane, aromatic hydrocarbons such as benzene, toluene, and xylene, alicyclic hydrocarbons such as cyclohexane and methylcyclohexane, and the like.

The vapor-phase method refers to a method in which ethylene, an α-olefin as a comonomer, and hydrogen as a chain transfer agent are fed in a gas state from the bottom of a vertical reaction vessel and a polymerization catalyst is introduced thereinto.

The polyethylene resin may contain a polar group.

The polyethylene resin containing a polar group may be, for example, an ethylene homopolymer and/or a polymer obtained by graft-modifying an ethylene/α-olefin copolymer with a polar group. Preferred α-olefins and the copolymerization proportion thereof are as described above.

The polar group refers to an electrically polar substituent. Preferred is a carboxyl group and/or a carboxylic anhydride group.

The polyethylene resin containing a polar group can be produced by reacting an ethylene homopolymer and/or an ethylene/α-olefin copolymer with a compound containing a polar group.

Examples of the compound containing a polar group include α,β-unsaturated dicarboxylic acids (e.g., maleic acid, fumaric acid, citraconic acid, itaconic acid) and anhydrides thereof, and unsaturated monocarboxylic acids (e.g., acrylic acid, methacrylic acid, crotonic acid, vinyl acetic acid, pentenoic acid). Preferred among these are maleic anhydride, acrylic acid, and methacrylic acid.

The mass of the polar group contained in the polyethylene resin containing a polar group is preferably 0.05% by mass or more, more preferably 0.10% by mass or more, while it is preferably 2.0% by mass or less, more preferably 1.0% by mass or less based on the polyethylene resin containing a polar group.

The amount of the polar group can be measured by infrared spectroscopy (IR).

The polyethylene resin containing a polar group can be produced, for example, by a method of graft-modifying polyethylene with a polar group-containing monomer. Any known method can be appropriately used. Specifically, known methods include a melt method in which a polyethylene resin melted using, for example, an extruder is reacted with a polar group-containing monomer using a reaction initiator and a solution method in which a polyethylene resin is dissolved in a solvent and reacted with a polar group-containing monomer using a reaction initiator. Both methods can be suitably used. From the standpoint of production cost and environmental impact, the melt method is more suitably used.

Any melt-kneading apparatus may be used for carrying out graft-modification. Commonly used apparatuses include a single-screw extruder, a twin-screw extruder, a kneader, a Banbury mixer, a Brabender instrument, and a reciprocating kneader (BUSS KNEADER). In terms of productivity, a single-screw extruder or a twin-screw extruder is more suitably used among these.

Examples of the reaction initiator used in graft-modification include radical initiators that decompose by heating or the like to generate radicals. Examples of radical initiators include organic peroxides, dihydroaromatic compounds, and dicumyl compounds.

The graft-modification temperature is selected as appropriate in consideration of the deterioration of the polyethylene resin, the decomposition of the polar group-containing monomer, the decomposition temperature of the peroxide used, and the like. In the case of the melt-kneading method mentioned above, the graft-modification temperature is normally 190°C to 350°C, suitably 200°C to 300°C.

The polyethylene resin may contain additives normally used in polyolefins, such as antioxidants, weathering stabilizers, antistatic agents, lubricants, antiblocking agents, and organic/inorganic pigments, if necessary. The above additives may be blended in the resin by any method. Examples of the method include a method in which the additives are directly added during the pelletizing process after polymerization and a method in which a high-concentration masterbatch of the additives is prepared in advance and the masterbatch is dry-blended during molding.

Examples of the polyethylene resin (PE) include high density polyethylene (HDPE), medium density polyethylene (MDPE), low density polyethylene (LDPE), linear low density polyethylene (LLDPE), very low density polyethylene (VLDPE), ultra high molecular weight polyethylene (UHPE), and cross-linked polyethylene (PEX). From the viewpoint of corrosion resistance, preferred is at least one selected from the group consisting of high density polyethylene and ultra high molecular weight polyethylene, and more preferred is ultra high molecular weight polyethylene among these.

The high density polyethylene preferably has a density of 0.940 g/m³ or higher, more preferably 0.945 g/m³ or higher, while preferably 0.970 g/m³ or lower, more preferably 0.965g/m³ or lower.

The density of polyethylene is measured in conformity with JIS K 7112.

The high-density polyethylene preferably has a linear structure. In the fraction with a number average molecular weight (Mn) of 100000 or more obtained by molecular weight fractionation, the number of long-chain branches per 1000 carbon atoms in the main chain is preferably 0.10 or less, and may be 0.01 or more.

The molecular weight fractionation is carried out by the following method.

A glass bead-packed column (diameter: 21 mm, length: 60 cm) is provided as a column and the column temperature is set to 130°C. A sample in an amount of 1 g dissolved in 30 mL of xylene is injected into the column. Next, the distillate is removed using a mixture of xylene and 2-ethoxyethanol blended at a ratio of 5:5 as a developing solvent. Then, components remaining in the column are distilled off using xylene as a developing solvent to obtain a polymer solution. Five times the amount of methanol is added to the obtained polymer solution to precipitate the polymer, followed by filtration and drying, whereby the fraction with a Mn of 100000 or more is recovered.

The number of long-chain branches is determined by the following method.

The number of branches with a length equal to or longer than that of a hexyl group is measured by ¹³C-NMR using a JNM-GSX400 nuclear magnetic resonance spectrometer (JEOL ltd.). The solvent used is a mixture of benzene-d6 and o-dichlorobenzene (volume ratio of 30:70). The number of long-chain branches is determined as the number per 1000 main-chain methylene carbons (chemical shift: 30 ppm), from the average of the peak intensities of α-carbon (34.6 ppm) and β-carbon (27.3 ppm).

The high density polyethylene may be a modified high density polyethylene. The modified high density polyethylene is a resin obtainable by grafting at least one monomer selected from the group consisting of unsaturated carboxylic acids and derivatives thereof to unmodified high density polyethylene in the presence of a radical generator.

Examples of the unsaturated carboxylic acids and derivatives thereof used in producing the modified high density polyethylene include monobasic unsaturated carboxylic acids, dibasic unsaturated carboxylic acids, and metal salts, amides, imides, esters, and anhydrides thereof. Among these, the monobasic unsaturated carboxylic acids commonly have a carbon number of at most 20 or less, preferably 15 or less. The derivatives thereof commonly have a carbon number of at most 20 or less, preferably 15 or less. The dibasic unsaturated carboxylic acids commonly have a carbon number of 30 or less, preferably 25 or less. The derivatives thereof commonly have a carbon number of 30 or less, preferably 25 or less. Among these unsaturated carboxylic acids and derivatives thereof, preferred are acrylic acid, methacrylic acid, maleic acid and its anhydride, 5-norbornene-2,3-dicarboxylic acid and its anhydride, and glycidyl methacrylate, and particularly suitable are maleic anhydride and 5-norbornenic anhydride.

The radical generator used in producing the modified high density polyethylene is preferably, but not limited to, an organic peroxide. The organic peroxide suitably has a half-life decomposition temperature of 100°C or higher. Examples of suitable organic peroxides include dicumyl peroxide, benzoyl peroxide, di-t-butyl peroxide, 2,5-dimethyl-di-(t-butylperoxy)hexane, 2,5-dimethyl-2,5-(t-butylperoxy)hexane-3, lauroyl peroxide, and t-butylperoxybenzoate.

The modified high density polyethylene is produced by uniformly mixing an unmodified high density polyethylene resin, an unsaturated carboxylic acid and/or its derivative, and a radical generator and treating the mixture. Specific examples of the method include a melt-kneading method using, for example, an extruder, a Banbury mixer, or a kneader, a solution method in which the aforementioned materials are dissolved in an appropriate solvent, a slurry method in which the aforementioned materials are suspended in an appropriate solvent, and a so-called vapor-phase grafting method.

The treatment temperature is selected as appropriate in consideration of the deterioration of the high density polyethylene, the decomposition of the unsaturated carboxylic acid and its derivative, the decomposition temperature of the peroxide used, and the like. In the case of the melt-kneading method mentioned above, the treatment temperature is normally 190°C to 350°C, suitably 200°C to 300°C.

In the production of the modified high density polyethylene, known methods as disclosed in JP S62-010107 A may be employed with an aim of improving the performance of the polyethylene, such as a method of treating the polyethylene during the graft-modification or after the modification with an epoxy compound or an amino or hydroxy group-containing polyfunctional compound and a method of removing unreacted monomers (the unsaturated carboxylic acid and its derivative) and by-product components by additional heating, washing, and the like.

The amount of grafting of at least one monomer selected from the group consisting of the unsaturated carboxylic acid and its derivative is preferably as high as possible. Still, it is generally within the range of 0.001 to 10% by mass.

The ultra high molecular weight polyethylene preferably has a weight average molecular weight of 1.0 × 10⁶ or more, more preferably 1.2 × 10⁶ or more, while it is preferably 7.0 × 10⁷ or less, more preferably 7.0 × 10⁶ or less.

The molecular weight of polyethylene is measured in polystyrene equivalent by gel permeation chromatography (GPC). The molecular weight of ultra high molecular weight polyethylene is measured by conversion from the intrinsic viscosity by the viscosity method.

Examples of the ultra high molecular weight polyethylene include an ultra high molecular weight ethylene homopolymer and ultra high molecular weight ethylene/α-olefin copolymers such as an ultra high molecular weight ethylene/propylene copolymer, an ultra high molecular weight ethylene/1-butene copolymer, an ultra high molecular weight ethylene/1-hexene copolymer, and an ultra high molecular weight ethylene/1-octene copolymer.

The ultra high molecular weight polyethylene may be in any form such as particles, pellets, sheets, and lumps. Among these, the ultra high molecular weight polyethylene in the form of particles having an average particle size of 1 to 1000 µm is preferred because it shows excellent productivity during processing and the resulting product has excellent physical properties and moldability.

The average particle size can be measured, for example, by a sieving test method using a standard sieve specified in JIS Z8801.

From the viewpoint of mechanical strength and heat resistance, the ultra high molecular weight polyethylene preferably has an intrinsic viscosity ([η]) of 10 dl/g or higher, more preferably 15 dl/g or higher, still more preferably 20 dl/g or higher, while preferably 80 dl/g or lower, more preferably 60 dl/g or lower, still more preferably 50 dl/g or lower.

The intrinsic viscosity can be measured, for example, by a method in which the viscosity is measured at 135°C by an Ubbelohde viscometer using a solution containing decahydronaphthalene as a solvent and having a polymer concentration of 0.0005 to 0.01%.

The ultra high molecular weight polyethylene may be a commercial product. Examples of the commercial product (trade name) include GUR4113, GUR4120, and GUR4130 (all available from Celanese Corporation), SUNFINE UH900 and SUNFINE UH950 (both available from Asahi Kasei Chemicals Corporation), and HI-ZEX MILLION 240M and HI-ZEX MILLION 340M (both available from Mitsui Chemicals, Inc).

The ultra high molecular weight polyethylene may be produced by any method. In an exemplary method, homopolymerization of ethylene or copolymerization of ethylene and a different olefin may be carried out using a catalyst for producing polyethylene. Examples of the α-olefin used include propylene, 1-butene, 4-methyl-1-pentene, 1-hexene, and 1-octene. Examples of the polymerization method include a solution polymerization method, a bulk polymerization method, a vapor-phase polymerization method, and a slurry polymerization method. Preferred among these is a slurry polymerization method as it can produce ultra high molecular weight polyethylene with uniform particle shapes and can efficiently and stably produce ultra high molecular weight polyethylene that may provide a ultra high molecular weight polyethylene composition having a high melting point, high crystallinity, and excellent mechanical strength, heat resistance, and abrasion resistance. The solvent used in the slurry polymerization method may be any commonly used organic solvent. Examples thereof include benzene, toluene, xylene, pentane, hexane, and heptane. Moreover, a liquefied gas such as isobutane or propane and an olefin such as propylene, 1-butene, 1-octene, or 1-hexene can also be used as the solvent.

The propylene resin (PP) may be a propylene homopolymer, a copolymer of propylene and a different monomer, or a hydrogenated product of the polymer. Two or more types of propylene resins (e.g., a propylene homopolymer and a propylene copolymer) may be used together as the propylene resin.

Examples of the different monomer copolymerized with propylene include α-olefins and non-conjugated dienes. One monomer can be used alone, or two or more monomers can be used in combination.

Examples of the α-olefins include C2 or C4-C20 α-olefins. More specific examples thereof include ethylene, 1-butene, 2-methyl-1-propene, 2-methyl-1-butene, 3-methyl-1-butene, 1-pentene, 1-hexene, 2-ethyl-1-butene, 2,3-dimethyl-1-butene, 2-methyl-1-pentene, 3-methyl-1-pentene, 4-methyl-1-pentene, 3,3-dimethyl-1-butene, 1-heptene, methyl-1-hexene, dimethyl-1-pentene, ethyl-1-pentene, trimethyl-1-butene, methylethyl-1-butene, 1-octene, methyl-1-pentene, ethyl-1-hexene, dimethyl-1-hexene, propyl-1-heptene, methylethyl-1-heptene, trimethyl-1-pentene, propyl-1-pentene, diethyl-1-butene, 1-nonene, 1-decene, 1-undecene, and 1-dodecene.

Examples of the non-conjugated dienes include compounds represented by the following formula (A):

CH₂=CR^{1A}-(CH₂)ₙ-CR^{2A}=CR^{3A}R^{4A}

wherein R^{1A}, R^{2A}, R^{3A}, and R^{4A} are each independently a hydrogen atom or a C1-C6 alkyl group and n is an integer of 1 to 20.

The C1-C6 alkyl group for any of R^{1A}, R^{2A}, R^{3A}, and R^{4A} may be either linear or branched. Specific examples of the alkyl group include a methyl group, an ethyl group, an n-propyl group, an isopropyl group, an n-butyl group, an isobutyl group, an s-butyl group, a t-butyl group, an n-pentyl group, an isopentyl group, a t-pentyl group, a neopentyl group, an n-hexyl group, and an isohexyl group.

When the polypropylene resin is a copolymer, it may be either a random copolymer or a block copolymer.

The amount of the propylene-derived skeleton in the random copolymer is normally 90 to 99 mol%, preferably 92 to 98 mol%. The amount of the propylene-derived skeleton in the block copolymer is normally 70 to 99 mol%, preferably 75 to 98 mol%.

The polypropylene resin is preferably a crystalline polypropylene resin.

The polypropylene resin may be a propylene-based block copolymer containing a crystalline propylene polymer portion and a propylene/ethylene random copolymer portion. Such a propylene-based block copolymer is a reaction mixture of a crystalline propylene polymer portion and a propylene/ethylene random copolymer portion. The propylene-based block copolymer is obtained by a production process including polymerization (first stage) of a propylene homopolymerized portion, which is a crystalline propylene polymer portion, and subsequent polymerization (second stage) of a propylene/ethylene random copolymerized portion. The crystalline propylene polymer is produced in one or two or more stages of polymerization (reaction conditions for the stages are the same or different) and the propylene/ethylene random copolymer portion is also produced in one or two or more stages of polymerization (reaction conditions for the stages are the same or different). Therefore, the whole production process of the propylene-based block copolymer is a multi-stage polymerization process including at least two sequential stages.

From the viewpoint of flexural modulus and heat resistance, the polypropylene resin preferably has an isotactic pentad fraction (mmmm fraction) of the propylene homopolymerized portion of 96.0% or higher, more preferably 96.5% or higher, still more preferably 97.0% or higher as measured by ¹³C-NMR.

The isotactic pentad fraction (mmmm fraction) herein refers to an isotactic fraction in units of pentads within the polypropylene molecular chain, as measured by the ¹³C-NMR (nuclear magnetic resonance) method described by A. Zambelli et al. in Macromolecules, Vol. 6, p. 925 (1973). The isotactic pentad fraction represents the fraction of propylene monomer units in which five consecutive propylene units are isotactically bonded.

Peak attribution in the ¹³C-NMR spectrum is performed based on the description in Macromolecules, Vol. 8, 687 (1975). ¹³C-NMR measurement can be performed using a Fourier transform NMR spectrometer [500 MHz for proton measurement] at a frequency of 125 MHz, with the signal detection limit improved to 0.001 by accumulating 20000 scans.

The polypropylene resin may have a long-chain branched structure. The polypropylene resin with a long-chain branched structure can have better melt properties. The long-chain branched structure can be evaluated, for example, by the degree of strain hardening (λmax) obtained from extensional viscosity measurements. The greater the amount and the longer the length of the branches, the higher the degree of strain hardening tends to be. The degree of strain hardening is preferably 6.0 or higher, more preferably 7.0 or higher, still more preferably 8.0 or higher, further preferably 9.0 or higher.

With respect to the method for measuring the degree of strain hardening, any method that can measure the uniaxial extensional viscosity will yield the same value in principle. For example, the measurement method and the measurement device described in Polymer42 (2001) 8663 can be employed.

The polypropylene resin preferably has a weight average molecular weight of 5.0 × 10⁴ or more, more preferably 1.0 × 10⁵ or more, while preferably 1.0 × 10⁶ or less, more preferably 7.0 × 10⁵ or less.

The molecular weight of a polypropylene resin is measured in polystyrene equivalent by gel permeation chromatography (GPC, column temperature: 140°C, eluent: 1,2,4-trichlorobenzene).

The melt flow rate (MFR) of the polypropylene resin is not limited. From the viewpoint of the appearance of the molded article to be obtained, the polypropylene resin used in blow molding preferably has a MFR of 0.03 g/10 min or more, more preferably 0.1 g/10 min or more, still more preferably 0.2 g/10 min or more, while preferably 3 g/10 min or less, more preferably 2 g/10 min or less, still more preferably 1.5 g/10 min or less, further preferably 1 g/10 min or less, particularly preferably 0.5 g/10 min or less.

The polypropylene resin used in extrusion molding preferably has a MFR of 0.01 g/10 min or more, more preferably 0.1 g/10 min or more, while preferably 5 g/10 min or less, more preferably 4.5 g/10 min or less, still more preferably 4 g/10 min or less.

The polypropylene resin used in injection molding preferably has a MFR of 1 g/10 min or more, more preferably 3 g/10 min or more, still more preferably 5 g/10 min or more, particularly preferably 10 g/10 min or more, while preferably 300 g/10 min or less, more preferably 200 g/10 min or less, still more preferably 100 g/10 min or less, further preferably 90 g/10 min or less, particularly preferably 80 g/10 min or less.

The MFR of the polypropylene resin is measured in conformity with JIS K 7210 at 230°C under a load of 21.18 N (2.16 kg).

The polypropylene resin may be a mixture of two or more types of polypropylene resins different in MFR.

The polypropylene resin may contain reinforcing fibers. Examples of the reinforcing fibers include glass fibers, carbon fibers, carbon nanotubes, basic magnesium sulfate fibers (magnesium oxysulfate fibers), potassium titanate fibers, aluminum borate fibers, calcium silicate fibers, calcium carbonate fibers, silicon carbide fibers, wollastonite, Xonotlite, metallic fibers, natural fibers (cotton, celluloses, silk, wool, hemp, etc.) recycled fibers (rayon, cupro, etc.), semi-synthetic fibers (acetate, Promix, etc.), synthetic fibers (polyester, polyacrylonitrile, polyamide, aramid, polyolefin, etc.), and modified fibers in which the surface and ends of any of the aforementioned fibers are chemically modified. Preferred among these are glass fibers.

The reinforcing fibers are preferably in the form of chopped strands. Chopped strands normally have a length of 1 to 10 mm and a fiber diameter of 5 to 20 µm, and preferably have a length of 1.5 to 6 mm and a fiber diameter of 8 to 14 µm. As another example, the reinforcing fibers in the form of continuous fiber bundles can be used. Continuous fiber bundles are commercially available, for example, as rovings. The fiber diameter thereof is normally 5 to 30 µm, preferably 13 to 20 µm.

The amount of the reinforcing fibers is preferably 10 to 50 parts by mass, more preferably 20 to 40 parts by mass based on 100 parts by mass in total of the propylene polymer and the reinforcing fibers.

The amorphous cycloolefin resin and the crystalline cycloolefin resin each may be a cycloolefin homopolymer (COP) or a cycloolefin copolymer (COC) that is a copolymer of cycloolefin and an acyclic olefin such as ethylene.

The amorphous cycloolefin resin preferably has a weight average molecular weight of 1.0 × 10⁴ or more, more preferably 2.0 × 10⁴ or more, while preferably 1.0 × 10⁶ or less, more preferably 7.0 × 10⁵ or less.

The molecular weight of an amorphous cycloolefin resin is measured in polyisobutylene equivalent by gel permeation chromatography (GPC, column temperature: 40°C, eluent: methylcyclohexane).

The cycloolefin monomer used in the amorphous cycloolefin resin is preferably a norbornene-based monomer. The norbornene-based monomer is a monomer containing a norbornene ring. Specific examples thereof include norbornenes, tetracyclododecenes, and dicyclopentadienes. These may contain a hydrocarbon group or a polar group as a substituent.

Examples of the hydrocarbon group include an alkyl group, an alkenyl group, an alkylidene group, and an aryl group.

Examples of the polar group include a hydroxyl group, a C1-C10 alkoxy group, an alkoxycarbonyl group, an aryloxycarbonyl group, a cyano group, an amide group, an imide ring-containing group, a triorganosiloxy group, a triorganosilyl group, an amino group, an acyl group, an alkoxysilyl group, a sulfonyl-containing group, a carboxyl group, an acid anhydride group, and a halogen. More specific examples include the alkoxy group such as a methoxy group and an ethoxy group; the alkoxycarbonyl group such as a methoxycarbonyl group and an ethoxycarbonyl group; the aryloxycarbonyl group such as a phenoxycarbonyl group, a naphthyloxycarbonyl group, a fluorenyloxycarbonyl group, and a biphenylyloxycarbonyl group; the triorganosiloxy group such as trimethylsiloxy group and a triethylsiloxy group; the triorganosilyl group such as a trimethylsilyl group and a triethylsilyl group; the amino group such as a primary amino group; and the alkoxysilyl group such as a trimethoxysilyl group and a triethoxysilyl group.

The norbornene-based monomer may further contain a double bond in addition to the double bond of the norbornene ring.

Preferred among these is a norbornene-based monomer that contains no polar group, namely, is composed only of carbon atoms and hydrogen atoms. The number of rings constituting the norbornene-based monomer is preferably 3 to 6, more preferably 3 or 4, particularly preferably 4.

Examples of the norbornene-based monomer that contains no polar group include: norbornenes having two rings such as 2-norbornene, 5-methyl-2-norbornene, 5-ethyl-2-norbornene, 5-butyl-2-norbornene, 5-hexyl-2-norbornene, 5-decyl-2-norbornene, 5-ethylidene-2-norbornene, 5-vinyl-2-norbornene, and 5-propenyl-2-norbornene;
norbornenes having three rings such as 5-cyclohexyl-2-norbornene, 5-cyclopentyl-2-norbornene, 5-cyclohexenyl-2-norbornene, 5-cyclopentenyl-2-norbornene, and 5-phenyl-2-norbornene;
norbornenes having four rings such as tetracyclo[9.2.1.0^{2,10}.0^{3,8}]tetradeca-3,5,7-12-tetraene (also referred to as 1,4-methano-1,4,4a,9a-tetrahydro-9H-fluorene) and tetracyclo[10.2.1.0^{2,11}.0^{4,9}]pentadeca-4,6,8,13-tetraene (also referred to as 1,4-methano-1,4,4a,9,9a,10-hexahydroanthracene);
tetracyclododecenes having four rings such as tetracyclo[6.2.1.1^{3,6}.0^{2,7}]dodec-4-ene, 9-methyltetracyclo[6.2.1.1^{3,6}.0^{2,7}]dodec-4-ene, 9-ethyltetracyclo[6.2.1.1^{3,6}.0^{2,7}]dodec-4-ene, 9-methy1enetetracyclo[6.2.1.1^{3,6}.0^{2,7}]dodec-4-ene, 9-ethylidenetetracyclo[6.2.1.1^{3,6}.0^{2,7}]dodec-4-ene, 9-vinyltetracyclo[6.2.1.1^{3,6}.0^{2,7}]dodec-4-ene, and 9-propenyltetracyclo[6.2.1.1^{3,6}.0^{2,7}]dodec-4-ene;
tetracyclododecenes having five rings such as 9-cyclohexyltetracyclo[6.2.1.1^{3,6}.0^{2,7}]dodec-4-ene, 9-cyclopentyltetracyclo[6.2.1.1^{3,6}.0^{2,7}]dodec-4-ene, 9-cyclohexenyltetracyclo[6.2.1.1^{3,6}.0^{2,7}]dodec-4-ene, 9-cyclopentenyltetracyclo[6.2.1.1^{3,6}.0^{2,7}]dodec-4-ene, and 9-phenyltetracyclo[6.2.1.1^{3,6}.0^{2,7}]dodec-4-ene;
dicyclopentadienes having three rings such as dicyclopentadiene, methyldicyclopentadiene, and dihydrodicyclopentadiene (also referred to as tricyclo[5.2.1.0^{2,6}]dec-8-ene); and
norbornene-based monomers having five or more rings, other than norbornenes, tetracyclododecenes, and dicyclopentadienes, such as pentacyclo[6.5.1.1^{3,6}.0^{2,7}.0^{9,13}]pentadeca-4,10-diene, pentacyclo[9.2.1.1^{4,7}.0^{2,10}.0^{3,8}]pentadeca-5,12-diene, and hexacyclo[6.6.1.1^{3,6}.1^{10,13}.0^{2,7}.0^{9,14}]heptadec-4-ene.

Examples of the norbornene-based monomer that contains a polar group include methyl tetracyclo[6.2.1.1^{3,6}.0^{2,7}]dodec-9-ene-4-carboxylate, tetracyclo[6.2.1.1^{3,6}.0^{2,7}]dodec-9-ene-4-methanol, tetracyclo[6.2.1.1^{3,6}.0^{2,7}]dodec-9-ene-4-carboxylic acid, tetracyclo[6.2.1.1^{3,6}.0^{2,7}]dodec-9-ene-4,5-dicarboxylic acid, tetracyclo[6.2.1.1^{3,6}.0^{2,7}]dodec-9-ene-4,5-dicarboxylic anhydride, methyl 5-norbornene-2-carboxylate, methyl 2-methyl-5-norbornene-2-carboxylate, 5-norbornen-2-yl acetate, 5-norbornene-2-methanol, 5-norbornen-2-ol, 5-norbornene-2-carbonitrile, 2-acetyl-5-norbornene, and 7-oxa-2-norbornene.

One of these norbornene-based monomers may be used alone or two or more thereof may be used in any combination.

A different cycloolefin monomer other than the norbornene-based monomers may be used together as the cycloolefin monomer. Examples of the different cycloolefin monomer include cyclobutene, cyclopentene, cyclopentadiene, cyclohexene, cyclohexadiene, cycloheptene, cycloheptadiene, cyclooctene, cyclooctadiene, cyclodecene, cyclododecene, tricyclo[6.2.1.0^{2,7}]undec-4-ene (tricycloundecene), and derivatives thereof. The "derivative" herein means one having a substituent on the ring (olefin ring). Examples of the substituent include alkyl, alkylene, vinyl, alkoxycarbonyl, and alkylidene groups. The ring of the "derivative" may have one of these substituents or two or more of these substituents. One of the different cycloolefin monomer may be used alone, or two or more thereof may be used in combination.

The number of carbon atoms constituting the ring (olefin ring) of the different cycloolefin monomer is preferably 4 or greater, more preferably 5 or greater, still more preferably 6 or greater, while it is preferably 20 or smaller, more preferably 15 or smaller, still more preferably 12 or smaller, particularly preferably 8 or smaller.

The different cycloolefin monomer is preferably cyclooctene, cycloheptene, or a derivative thereof, more preferably cyclooctene or a derivative thereof, still more preferably cyclooctene.

The proportion of the structural unit derived from the different cycloolefin monomer is preferably 10 mol% or more, more preferably 30 mol% or more, still more preferably 40 mol% or more, while it is preferably 50 mol% or less.

The melt flow rate (MFR) of the amorphous cycloolefin resin as measured at 280°C under a load of 2.16 kg in conformity with JIS K 6719 may be selected as appropriate in accordance with the purpose of use. The MFR is normally within the range of 0.1 g/10 min or higher, preferably 1 g/10 min or higher, more preferably 5 g/10 min or higher, while it is normally 200 g/10 min or lower, preferably 150 g/10 min or lower, more preferably 100 g/10 min or lower. Maintaining the MFR within the above range improves molding processability and the yield of acceptable molded articles.

The amorphous cycloolefin resin can contain various additives such as polymerization retarders, radical crosslinking retarders, reinforcing materials, modifiers, antioxidants, flame retardants, fillers, colorants, and light stabilizers.

Examples of the reinforcing materials include glass fibers, glass cloths, paper substrates, and glass nonwoven fabrics.

Examples of the modifiers include elastomers such as natural rubber, butadiene rubber (BR), isoprene rubber (IR), cyclopentene rubber (CPR), styrene-butadiene copolymer (SBR), styrene-butadiene-styrene block copolymer (SBS), styrene-isoprene-styrene copolymer (SIS), ethylene-propylene-diene terpolymer (EPDM), ethylene-vinyl acetate copolymer (EVA), and hydrogenated products thereof.

Examples of the antioxidants include various antioxidants for plastics and rubber, such as hindered phenol-based antioxidants, phosphorus-based antioxidants, and amine-based antioxidants. One of these antioxidants may be used alone. Still, two or more antioxidants are preferably used in combination.

Examples of the flame retardants include phosphorus-based flame retardants, nitrogen-based flame retardants, halogen-based flame retardants, metal hydroxide-based flame retardants such as aluminum hydroxide, and antimony compounds such as antimony trioxide. One flame retardant may be used alone. Still, two or more flame retardants are preferably used in combination.

The crystalline cycloolefin resin preferably has a number average molecular weight of 5.0 × 10³ or more, more preferably 1.0 × 10⁴ or more, while preferably 1.0 × 10⁶ or less, more preferably 5.0 × 10⁵ or less.

The molecular weight of a crystalline cycloolefin resin is calculated based on the results of ¹H-NMR measurement, using the ratio of the number of hydrogen atoms present at the polymer chain ends to the number of hydrogen atoms present in the polymer chain excluding the chain ends.

Examples of the cycloolefin monomer used in the crystalline cycloolefin resin include those exemplified as the cycloolefin monomer used in the amorphous cycloolefin resin. The crystalline cycloolefin resin may be a hydrogenated crystalline norbornene ring-opened polymer or a hydrogenated crystalline dicyclopentadiene ring-opened polymer. From the viewpoint of heat resistance, a hydrogenated crystalline dicyclopentadiene ring-opened polymer is preferred.

The hydrogenated crystalline norbornene ring-opened polymer has a repeating structure represented by the following formula (2-1)

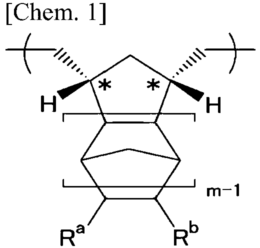

Here, m is 1 or 2.

R^{a} and R^{b} are each independently a hydrogen atom or a group selected from a substituted or unsubstituted C1-C12 alkyl group, a substituted or unsubstituted C3-C20 cycloalkyl group, and a substituted or unsubstituted C6-C12 aryl group.

The hydrogenated crystalline norbornene ring-opened polymer containing the repeating unit represented by the formula (2-1) has stereoregularity because the carbon atoms indicated by (*) in the formula (2-1) are asymmetric carbon atoms.

The presence or absence of stereoregularity in the hydrogenated crystalline norbornene ring-opened polymer is not limited, as long as the polymer is crystalline (i.e., has a melting point). In a preferred embodiment, the hydrogenated crystalline norbomene ring-opened polymer has isotactic or syndiotactic regularity. In the hydrogenated crystalline norbornene ring-opened polymer having isotactic regularity, the proportion of racemo diads in the repeating unit of the norbornene-based monomer is preferably 20% or less, more preferably 10% or less.

The proportion of racemo diads in the hydrogenated crystalline norbornene ring-opened polymer can be calculated by ¹³C-NMR measurement at 150°C in which o-dichlorobenzene-d4 is used as a solvent. The calculation is based on the intensity ratio between the signal derived from meso diads at 43.35 ppm and the signal derived from racemo diads at 43.43 ppm.

In order to allow the hydrogenated crystalline norbornene ring-opened polymer having isotactic regularity to have particularly good heat resistance and a high crystallization rate, a norbornene-based monomer containing dicyclopentadiene is preferably used. The proportion of dicyclopentadiene in the norbornene-based monomer is not limited. Still, the proportion is preferably 80% by mass or higher, more preferably 90% by mass or higher, particularly preferably 95% by mass or higher.

The norbornene-based monomer can be used in combination with the different cycloolefin monomer described above. In order to allow the hydrogenated norbornene ring-opened polymer to have particularly good heat resistance and a high crystallization rate, the amount of the different cycloolefin monomer is preferably 20% by mass or less, more preferably 10% by mass or less, particularly preferably 5% by mass or less based on the total monomer amount.

The hydrogenated crystalline norbornene ring-opened polymer having isotactic regularity can be produced as follows, for example. The norbornene-based monomer described above is ring-opening polymerized using a polymerization catalyst containing a compound of a transition metal belonging to Group 6 of the periodic table represented by the following formula 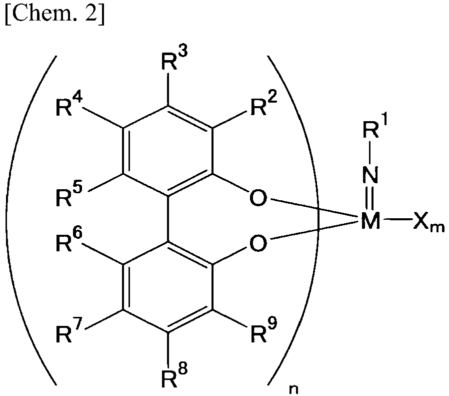 wherein M is an atom selected from the Group 6 transition metal atoms of the periodic table; R¹ is a group selected from a C1-C12 alkyl group and a C6-C12 aryl group optionally containing a substituent; R² to R⁹ are each independently a hydrogen atom or a group selected from a C1-C12 alkyl group optionally containing a substituent and a C6-C12 aryl group optionally containing a substituent, and R² to R⁹ are optionally bonded to each other to form a ring structure; X is independently an atom selected from halogen atoms; n is 1 or 2; and m is 0 or 2. Then, the resulting norbornene ring-opened polymer is hydrogenated.

From the viewpoint of solvent resistance, the hydrogenated crystalline norbornene ring-opened polymer is also preferably a hydrogenated syndiotactic norbornene ring-opened polymer having a proportion of racemo diads of higher than 90% and high syndiotactic stereoregularity. The proportion of racemo diads is preferably higher than 90%, more preferably higher than 95%, particularly preferably higher than 99%.

The syndiotacticity can be determined using [(racemo diads)/(meso diads + racemo diads) × 100]. The proportion of racemo diads can be calculated by analyzing the ¹³C-NMR spectrum of the hydrogenated norbornene ring-opened polymer. For example, ¹³C-NMR spectral analysis of the hydrogenated norbornene ring-opened polymer is performed at 60°C using chloroform-d as a solvent, and the spectrum of the methylene carbon atom in the 5-membered ring can be quantitatively determined. Specifically, the proportions of racemo diads and meso diads can be determined based on the intensity ratio between the signal attributed to meso diads at 31.787 ppm and the signal attributed to racemo diads at 31.799 ppm. For example, the proportions of racemo diads and meso diads can be determined by ¹³C NMR spectroscopy (targeting the methine carbon atoms in the non-backbone five-membered rings) performed on a hydrogenated tetracyclododecene ring-opened polymer at 200°C in which a mixed solvent of o-dichlorobenzene-d4 and trichlorobenzene (1:2 in weight ratio) is used. The determination is based on the intensity ratio between the signal attributed to meso diads at 51.63 ppm and the signal attributed to racemo diads at 51.72 ppm.

Examples of the norbornene-based monomer used in the hydrogenated crystalline norbornene ring-opened polymer having syndiotactic stereoregularity include those described above.

The hydrogenated crystalline norbornene ring-opened polymer having syndiotactic stereoregularity may be produced from a combination of a norbornene-based monomer and the different cycloolefin monomer described above, as long as the resulting hydrogenated norbornene ring-opened polymer has a solvent resistance.

The hydrogenated crystalline norbornene ring-opened polymer having syndiotactic stereoregularity can be produced as follows, for example. The norbornene-based monomer described above is ring-opening polymerized using a polymerization catalyst containing a compound of a transition metal belonging to Group 6 of the periodic table represented by the following formula 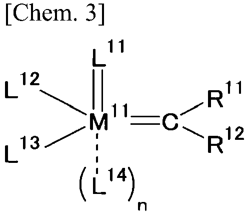
wherein M¹¹ is an atom selected from the Group 6 transition metal atoms of the periodic table;
R¹¹ and R¹² are each independently a hydrogen atom or a group selected from a substituted or unsubstituted C1-C12 alkyl group, a substituted or unsubstituted C3-C20 cycloalkyl group, and a substituted or unsubstituted C6-C12 aryl group;
L¹¹ is an oxygen atom, or a nitrogen atom which may be unsubstituted or substituted with a substituent selected from a substituted or unsubstituted C1-C12 alkyl group, a substituted or unsubstituted C3-C20 cycloalkyl group, and a substituted or unsubstituted C6-C12 aryl group;
L¹² and L¹³ are each independently a substituted or unsubstituted 5- to 15-membered conjugated heterocyclic group having at least one nitrogen atom, or a group represented by O-R¹³;
R¹³ is a group selected from a substituted or unsubstituted C1-C12 alkyl group, a substituted or unsubstituted C3-C20 cycloalkyl group, and a substituted or unsubstituted C6-C30 aryl group;
L¹⁴ is a phosphorus-containing compound, an oxygen-containing compound, or a nitrogen-containing compound;
and n is 0 or 1. Then, the resulting norbornene ring-opened polymer is hydrogenated.

The hydrogenated crystalline dicyclopentadiene ring-opened polymer has a repeating unit represented by the following formula (2-2):

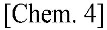

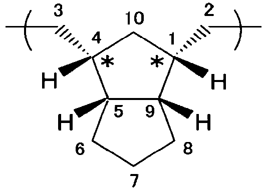

The hydrogenated crystalline dicyclopentadiene ring-opened polymer has stereoregularity (tacticity) because the carbon atoms indicated by (1,4) in the formula (2-2) are asymmetric carbon atoms (represented by *).

From the viewpoint of a high melting point and processability, the hydrogenated crystalline dicyclopentadiene ring-opened polymer is preferably a polymer having syndiotactic stereoregularity and a degree of syndiotacticity, i.e., the proportion of racemo diads in the total of meso diads and racemo diads (hereafter, also simply referred to as the proportion of racemo diads), of higher than 90%. The proportion of racemo diads in the hydrogenated crystalline dicyclopentadiene ring-opened polymer is preferably higher than 91%, more preferably higher than 92%.

The syndiotacticity can be specifically determined using the formula I: [(racemo diads)/(meso diads + racemo diads) × 100 (%)]. The proportion of racemo diads can be calculated by analyzing the ¹³C-NMR spectrum of the hydrogenated crystalline dicyclopentadiene ring-opened polymer. Specifically, it can be determined by quantifying the spectrum of the carbon atoms represented by (5,9) in the formula (2-2) of the hydrogenated crystalline dicyclopentadiene ring-opened polymer. In other words, the proportion of racemo diads can be determined by ¹³C NMR spectroscopy targeting the (5,9) carbon atoms in the repeating unit represented by the formula (2-2) at 200°C in a mixed solvent of o-dichlorobenzene-d₄ and trichlorobenzene (mixing ratio (weight basis) 1:2). The determination is based on the calculation in which the peak area value of the signal derived from meso diads at 43.35 ppm and the peak area value of the signal derived from racemo diads at 43.43 ppm are substituted into the formula I.

The hydrogenated crystalline dicyclopentadiene ring-opened polymer has a repeating unit derived from dicyclopentadiene represented by the following formula (3-2):

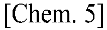

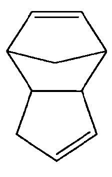

In order to allow the hydrogenated crystalline dicyclopentadiene ring-opened polymer to have particularly good heat resistance and a high crystallization rate, the hydrogenated crystalline dicyclopentadiene ring-opened polymer used preferably contains a large number of dicyclopentadiene-derived repeating units. The proportion of dicyclopentadiene-derived repeating unit in all the repeating units in the hydrogenated crystalline dicyclopentadiene ring-opened polymer is not limited. Still, the proportion is preferably 90% by mass or higher, more preferably 95% by mass or higher, particularly preferably 97% by mass or higher.

Dicyclopentadiene has endo and exo stereoisomers, both of which can be used as monomers, and either one isomer can be used alone or an isomer mixture containing endo and exo isomers in any ratio can also be used. In order to increase the crystallinity of the hydrogenated crystalline dicyclopentadiene ring-opened polymer and to improve the heat resistance thereof, the proportion of one stereoisomer is preferably increased. The dicyclopentadiene used preferably has a proportion of the endo isomer or the exo isomer of 90% or higher, more preferably 95% or higher, particularly preferably 99% or higher. From the viewpoint of ease of synthesis, the stereoisomer whose proportion is higher is preferably the endo isomer.

Dicyclopentadiene can be used in combination with a different cyclic olefin monomer. The amount of the different cyclic olefin monomer is normally less than 10% by mass, preferably less than 3% by mass, more preferably less than 1% by mass based on the total amount of dicyclopentadiene and the different cyclic olefin monomer.

Examples of the different cyclic olefin monomer usable in combination with dicyclopentadiene include norbornene-based monomers describes above (other than dicyclopentadiene) and the different cycloolefin monomers described above.

The hydrogenated crystalline dicyclopentadiene ring-opened polymer can be produced by ring-opening polymerizing a monomer mixture containing above-described dicyclopentadiene or a combination of dicyclopentadiene and a different cyclic olefin monomer with a polymerization catalyst containing a tungsten compound represented by the following formula: 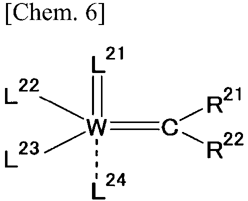
wherein W is a tungsten atom;
R²¹ and R²² are each independently a hydrogen atom or a group selected from a C1-C12 alkyl group, a C6-C12 aryl group optionally containing a substituent, and a C3-C20 cycloalkyl group optionally containing a substituent;
L²¹ is a nitrogen atom optionally containing a substituent selected from a C1-C12 alkyl group, a C6-C12 aryl group optionally containing a substituent, and a C3-C12 cycloalkyl group optionally containing a substituent;
L²² is a 5- to 15-membered conjugated heterocyclic group having at least one nitrogen atom;
L²³ is an alkoxy group represented by O-R²³ where R²³ is a group selected from a C1-C12 alkyl group optionally containing a substituent and a C6-C30 aryl group optionally containing a substituent; and
L²⁴ is a 12- to 24-membered neutral conjugated heterocyclic ligand having at least two nitrogen atoms, and the conjugated heterocyclic ligand optionally contains a substituent. Then, the resulting dicyclopentadiene ring-opened polymer is hydrogenated.

The amorphous cycloolefin resin and the crystalline cycloolefin resin are each also preferably a cycloolefin copolymer (COC).

The cycloolefin copolymer may be a copolymer of ethylene or an α-olefin and a cycloolefin monomer, a ring-opened copolymer of a cycloolefin monomer, a hydrogenated product of a ring-opened copolymer of a cycloolefin monomer, or a graft-modified product thereof.

The cycloolefin monomer in the cycloolefin copolymer is not limited as long as the purpose of the disclosure is not disturbed. Typically, preferred examples of the cycloolefin monomer used include norbornene and substituted norbornenes, dicyclopentadiene, 1,4,5,8-dimethano-1,2,3,4,4a,5,8,8a-octahydronaphthalene (TCD), and 1,4,4a,9a-tetrahydro-1,4-methanofluorene (MTF). In terms of cost, polymerizability, and balance of physical properties of the resulting cycloolefin copolymer, the cycloolefin monomer is particularly preferably norbornene, TCD, or dicyclopentadiene. One cycloolefin monomer can be used alone, or two or more cycloolefin monomers can be used in combination.

The substituted norbornenes are not limited. Examples of substituents in the substituted norbornenes include halogen atoms and monovalent or divalent hydrocarbon groups. Specific examples of the substituted norbornenes include compounds represented by the following formula (I): 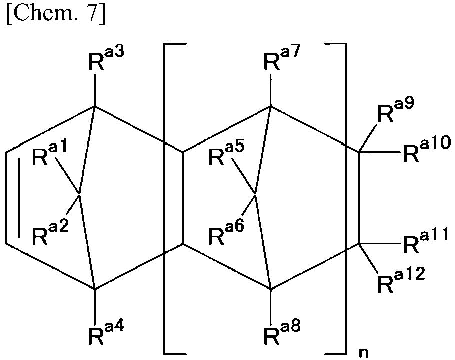
wherein R^{a1} to R^{a12} may be the same as or different from each other and are each an atom or group selected from the group consisting of a hydrogen atom, a halogen atom, and a hydrocarbon group;
R^{a9} and R^{a10}, and R^{a11} and R^{a12} may be combined to form a divalent hydrocarbon group;
R^{a9} or R^{a10} and R^{a11} or R^{a12} may be bonded to each other to form a ring;
n is 0 or a positive integer;
when n is 2 or greater, R^{a5} to R^{a8} may be the same as or different from each other in each repeating unit;
when n is 0, at least one of R^{a1} to R^{a4} and R^{a9} to R^{a12} is not a hydrogen atom.

Specific examples of R^{a1} to R^{a8} include a hydrogen atom; halogen atoms such as fluorine, chlorine, and bromine; and C1-C20 alkyl groups. R^{a1} to R^{a8} may all be different atoms or groups. Some or all of R^{a1} to R^{a8} may be the same atom or group.

Specific examples of R^{a9} to R^{a12} include a hydrogen atom; halogen atoms such as fluorine, chlorine, and bromine; C1-C20 alkyl groups; cycloalkyl groups such as a cyclohexyl group; substituted or unsubstituted aromatic hydrocarbon groups such as phenyl, tolyl, ethylphenyl, isopropylphenyl, naphthyl, and anthryl groups; and aralkyl groups such as benzyl and phenethyl groups. R^{a9} to R^{a12} may all be different atoms or groups. Some or all of R^{a9} to R^{a12} may be the same atom or group.

Specific examples of the divalent hydrocarbon group formed by combining R^{a9} and R^{a10}, or R^{a11} and R^{a12} include alkylidene groups such as ethylidene, propylidene, and isopropylidene groups.

When R^{a9} or R^{a10} and R^{a11} or R^{a12} are bonded to each other to form a ring, the resulting ring may be monocyclic or polycyclic. The resulting ring may be a polycyclic ring with crosslinking. The resulting ring may contain a double bond. The resulting ring may contain a substituent such as a methyl group.

Specific examples of the substituted norbornenes represented by the formula (I) include: bicyclic cycloolefins such as 5-methyl-bicyclo[2.2.1]hept-2-ene, 5,5-dimethyl-bicyclo[2.2.1]hept-2-ene, 5-ethyl-bicyclo[2.2.1]hept-2-ene, 5-butyl-bicyclo[2.2.1]hept-2-ene, 5-ethylidene-bicyclo[2.2.1]hept-2-ene, 5-hexyl-bicyclo[2.2.1]hept-2-ene, 5-octyl-bicyclo[2.2.1]hept-2-ene, 5-octadecyl-bicyclo[2.2.1]hept-2-ene, 5-methylidene-bicyclo[2.2.1]hept-2-ene, 5-vinyl-bicyclo[2.2.1]hept-2-ene, and 5-propenyl-bicyclo[2.2.1]hept-2-ene;
tricyclic cycloolefins such as tricyclo[4.3.0.1^{2,5}]deca-3,7-diene (trivial name: dicyclopentadiene), tricyclo[4.3.0.1^{2,5}]dec-3-ene; tricyclo[4.4.0.1^{2,5}]undeca-3,7-diene or tricyclo[4.4.0.1^{2,5}]undeca-3,8-diene, or tricyclo[4.4.0.1^{2,5}]undec-3-ene which is a partially hydrogenated product thereof (or an adduct of cyclopentadiene and cyclohexene); 5-cyclopentyl-bicyclo[2.2.1]hept-2-ene, 5-cyclohexyl-bicyclo[2.2.1]hept-2-ene, 5-cyclohexenylbicyclo[2.2.1]hept-2-ene, and 5-phenyl-bicyclo[2.2.1]hept-2-ene;
tetracyclic cycloolefins such as tetracyclo[4.4.0.1^{2,5}.1^{7,10}]dodec-3-ene (also simply referred to as tetracyclododecene), 8-methyltetracyclo[4.4.0.1^{2,5}.1^{7,10}]dodec-3-ene, 8-ethyltetracyclo[4.4.0.1^{2,1}.1^{7,10}]dodec-3-ene, 8-methylenetetracyclo[4.4.0.1^{2,5}.1^{7,10}]dodec-3-ene, 8-ethylidenetetracyclo[4.4.0.1^{2,5}.1^{7,10}]dodec-3-ene, 8-vinyltetracyclo[4,4.0.1^{2,5}.1^{7,10}]dodec-3-ene, and 8-propenyl-tetracyclo[4.4.0.1^{2,1}.1^{7,10}]dodec-3-ene; and
polycyclic cycloolefins such as 8-cyclopentyl-tetracyclo[4.4.0.1^{2,5}.1^{7,10}]dodec-3-ene, 8-cyclohexyl-tetracyclo[4.4.0.1^{2,1}.1^{7,10}]dodec-3-ene, 8-cyclohexenyl-tetracyclo[4.4.0.1^{2,5}.1^{7,10}]dodec-3-ene, 8-phenyl-cyclopentyl-tetracyclo[4.4.0.1^{2,1}.1^{7,10}]dodec-3-ene, tetracyclo[7.4.1^{3,6}.0^{1,9}.0^{2,7}]tetradeca-4,9,11,13-tetraene (also referred to as 1,4-methano-1,4,4a,9a-tetrahydrofluorene), tetracyclo[8.4.1^{4,7}.0^{1,10}.0^{3,8}]pentadeca-5,10,12,14-tetraene (also referred to as 1,4-methano-1,4,4a,5,10,10a-hexahydroanthracene); pentacyclo[6.6.1.1^{3,6}.0^{2,7}.0^{9,14}]-4-hexadecene, pentacyclo[6.5.1.1^{3,6}.0^{2,7}.0^{9,13}]-4-pentadecene, pentacyclo[7.4.0.0^{2,7}.1^{3,6}.1^{10,13}]-4-pentadecene; heptacyclo[8.7.0.1^{2,9}.1^{4,7}.1^{11,17}.0^{3,8}.0^{12,16}]-5-eicocene, heptacyclo[8.7.0.1^{2,9}.0^{3,8}.1^{4,7}.0^{12,17}.1^{13,16}]-14-eicocene; and a cyclopentadiene tetramer.

Preferred among these are alkyl-substituted norbornenes substituted with one or more alkyl groups, such as bicyclo[2.2.1]hept-2-ene and alkylidene-substituted norbornenes substituted with one or more alkylidene groups, such as bicyclo[2.2.1]hept-2-ene. Particularly preferred is 5-ethylidene-bicyclo[2.2.1]hept-2-ene (trivial name: 5-ethylidene-2-norbornene, or simply ethylidene norbornene).

The ethylene or the α-olefin is preferably a C2-C20 α-olefin, particularly preferably ethylene.

Not only an unsubstituted α-olefin but also a substituted α-olefin containing a substituent such as a halogen atom can be used as the α-olefin. The number of carbon atoms in the α-olefin is preferably 3 or more and 20 or less, preferably 4 or more and 12 or less, more preferably 6 or more and 10 or less.

Specific examples of C3-C12 α-olefins include propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, and 1-dodecene. Preferred among these are 1-hexene, 1-octene, and 1-decene.

The cycloolefin copolymer may have any molecular weight. The weight average molecular weight (Mw) of the cycloolefin copolymer is preferably 5000 or more and 200000 or less, more preferably 10000 or more and 100000 or less as measured in polystyrene equivalent by gel permeation chromatography (GPC).

The number average molecular weight (Mn) of the cycloolefin copolymer is preferably 5000 or more and 200000 or less, more preferably 10000 or more and 100000 or less as measured in polystyrene equivalent by gel permeation chromatography (GPC).

The polydispersity index (Mw/Mn) is preferably 1.2 or more, more preferably 1.3 or more.

The cycloolefin copolymer may have any melt flow rate (MFR). From the viewpoint of the appearance of the resulting molded article, the MFR is normally 1 g/10 min or higher, preferably 2 g/10 min or higher, more preferably 5 g/10 min or higher, while it is normally 400 g/10 min or lower, preferably 200 g/10 min or lower, more preferably 100 g/10 min or lower.

The MFR is a value measured in conformity with ASTM1238 (260°C, 2.16 kg).

The cycloolefin copolymer is mixed with various additives as needed and then molded into, for example, films or sheets. The resulting cycloolefin copolymer films or sheets are widely used for various applications. Examples of additives that can be added to the cycloolefin copolymer include antioxidants, weathering stabilizers, ultraviolet absorbers, antibacterial agents, flame retardants, and colorants. These additives are added to the cycloolefin copolymer in amounts that consider the typical usage amounts depending on the type thereof.

The polymethylpentene resin (PMP) may be a 4-methyl-1-pentene homopolymer or a copolymer of 4-methyl-1-pentene and a different monomer.

The different monomer (comonomer) in the polymethylpentene resin may be any monomer that is copolymerizable with 4-methyl-1-pentene. From the viewpoint of ease of availability and copolymerization properties and the like, preferred examples of the different monomer include C2-C20 α-olefins such as ethylene, propylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 3-methyl-1-pentene, 3-ethyl-1-pentene, 4,4-dimethyl-1-pentene, 4-methyl-1-hexene, 4,4-dimethyl-1-hexene, 4-ethyl-1-hexene, and 3-ethyl-1-hexene. Each of these different monomers may be used alone or two or more of these may be used in combination.

Preferred among these are ethylene, propylene, 1-butene, 3-methyl-1-butene, 1-hexene, 3-methyl-1-pentene, 1-octene, 1-decene, 1-dodecene, 1-tetradecene, 1-hexadecene, and 1-octadecene. More preferred are C6-C20 α-olefins other than methyl-1-pentene, such as 1-hexene, 3-methyl-1-pentene, 1-octene, 1-decene, 1-dodecene, 1-tetradecene, 1-hexadecene, and 1-octadecene, and still more preferred are 1-hexene, 1-decene, 1-hexadecene, and 1-octadecene.

The proportion of the structural unit derived from 4-methyl-1-pentene in the polymethylpentene resin is normally 85 mol% or more, preferably 90 mol% or more, more preferably 95 mol% or more, while the proportion of the structural unit derived from the different monomer in the polymethylpentene resin is normally 15 mol% or less, preferably 10 mol% or less, more preferably 5 mol% or less.

The monomer composition can be determined by IR or ¹³C-NMR.

The polymethylpentene resin may be a graft-modified polymer obtained by graft-modifying a 4-methyl-1-pentene polymer with a polar monomer.

Examples of the polar monomer used in graft modification include hydroxy group-containing ethylenically unsaturated compounds, amino group-containing ethylenically unsaturated compounds, epoxy group-containing ethylenically unsaturated compounds, aromatic vinyl compounds, unsaturated carboxylic acids or derivatives thereof, vinyl ester compounds, vinyl chloride, and carbodiimide compounds. Particularly preferred are unsaturated carboxylic acids or derivatives thereof. Examples of the unsaturated carboxylic acids or derivatives thereof include unsaturated compounds containing one or more carboxylic acid groups, esters of compounds containing carboxylic acid groups and alkyl alcohols, and unsaturated compounds containing one or more carboxylic anhydride groups. Examples of the unsaturated groups include a vinyl group, a vinylene group, and an unsaturated cyclic hydrocarbon group.

Specific examples of the polar monomer include unsaturated carboxylic acids such as acrylic acid, maleic acid, fumaric acid, tetrahydrophthalic acid, itaconic acid, citraconic acid, crotonic acid, isocrotonic acid, nadic acid^{®} (endo-cis-bicyclo[2.2.1]hept-5-ene-2,3-dicarboxylic acid). Examples of derivatives of unsaturated carboxylic acids include acid halides, amides, imides, anhydrides, and esters. Specific examples of the derivatives include malenyl chloride, maleimide, maleic anhydride, citraconic anhydride, monomethyl maleate, dimethyl maleate, and glycidyl maleate.

The polymethylpentene resin can optionally contain at least one selected from different polymers from the 4-methyl-1-pentene polymer and additives for resins, within the range that does not disturb the effects of the disclosure.

A thermoplastic resin different from the 4-methyl-1-pentene polymer can be widely used as the different polymer. The amount of the different polymer is preferably 30% by mass or less, more preferably 20% by mass or less, still more preferably 10% by mass or less based on the amount of the 4-methyl-1-pentene polymer.

Any thermoplastic resin can be used as long as it is different from the 4-methyl-1-pentene polymer. Examples thereof include:
thermoplastic polyolefin resins such as polyethylene (e.g., low-density polyethylene, medium-density polyethylene, high-density polyethylene, and high-pressure low-density polyethylene); polypropylene (e.g., isotactic polypropylene and syndiotactic polypropylene); poly(1-butene); poly(4-methyl-1-pentene); poly(3-methyl-1-pentene); poly(3-methyl-1-butene); ethylene/α-olefin copolymers; propylene/α-olefin copolymers; 1-butene/α-olefin copolymers; 4-methyl-1-pentene/α-olefin copolymers; cyclic olefin polymers; crystalline cyclic olefin polymers; cyclic olefin copolymers; chlorinated polyolefins; and modified polyolefin resins obtained by modifying these olefin resins;
thermoplastic polyamide resins such as aliphatic polyamides (nylon 6, nylon 11, nylon 12, nylon 66, nylon 610, nylon 612);
thermoplastic polyester resins such as polyethylene terephthalate, polybutylene terephthalate, and polyester elastomers;
thermoplastic vinyl aromatic resins such as polystyrene, crystalline polystyrene, ABS resin, AS resin, and styrene-based elastomers (e.g., styrene/butadiene/styrene block copolymers, styrene/isoprene/styrene block copolymers, styrene/isobutylene/styrene block copolymers, and hydrogenated products thereof);
thermoplastic polyurethane; vinyl chloride resins; vinylidene chloride resins; acrylic resins; vinyl acetate copolymers such as ethylene/vinyl acetate copolymers; ethylene/methacrylic acid acrylate copolymers; ionomers; ethylene/vinyl alcohol copolymers; polyvinyl alcohol; fluororesins; polycarbonates; polyacetals; polyphenylene oxide; polyphenylene sulfide; polyimides; polyarylates; polysulfones; polyether sulfones; rosin-based resins; terpene-based resins and petroleum resins; and
copolymer rubbers such as ethylene/α-olefin/diene copolymers, propylene/α-olefin/diene copolymers, 1-butene/α-olefin/diene copolymers, polybutadiene rubber, polyisoprene rubber, cyclopentene rubber, neoprene rubber, nitrile rubber, butyl rubber, polyisobutylene rubber, natural rubber, and silicone rubber.

Among the thermoplastic polyolefin resins, polyethylene and polypropylene, for example, can also be used as crystal nucleators. The preferred amount thereof in such a case is 0.001 to 5% by mass based on the amount of the 4-methyl-1-pentene polymer.

Preferred among the thermoplastic resins are low-density polyethylene, medium-density polyethylene, high-density polyethylene, high-pressure low-density polyethylene, isotactic polypropylene, syndiotactic polypropylene, amorphous cyclic olefin polymers, crystalline cyclic olefin polymers, cyclic olefin copolymers, poly(1-butene), poly(3-methyl-1-pentene), poly(3-methyl-1-butene), ethylene/α-olefin copolymers, propylene/α-olefin copolymers, 1-butene/α-olefin copolymers, styrene-based elastomers, vinyl acetate copolymers, ethylene/methacrylic acid acrylate copolymers, ionomers, fluororesins, rosin-based resins, terpene-based resins, and petroleum resins. In terms of improvement in heat resistance, improvement in low-temperature resistance, and flexibility, more preferred are polyethylene, isotactic polypropylene, syndiotactic polypropylene, cyclic olefin copolymers, ethylene/α-olefin copolymers, propylene/α-olefin copolymers, 1-butene/α-olefin copolymers, vinyl acetate copolymers, styrene-based elastomers, rosin-based resins, terpene-based resins, and petroleum resins.

The different polymer may be partially or entirely a graft-modified polymer obtained by graft-modifying the polymer with a polar monomer. The graft modification is as described above.

Examples of the additives for resins include nucleating agents, antiblocking agents, pigments, dyes, fillers, lubricants, plasticizers, mold release agents, antioxidants, flame retardants, ultraviolet absorbers, antibacterial agents, surfactants, antistatic agents, weathering stabilizers, heat stabilizers, anti-slip agents, foaming agents, crystallization aids, antifogging agents, anti-aging agents, hydrochloric acid absorbers, impact modifiers, crosslinking agents, co-crosslinking agents, crosslinking aids, adhesives, softeners, and processing aids.

One type of the additives for resins may be used alone, or two or more types of the additives for resins may be used in combination.

The amounts of the additives for resins are not limited and depend on the application to the extent that does not impair the purpose of the disclosure. The amount of each additive added is preferably 0.001 to 30% by mass based on the amount of the 4-methyl-1-pentene polymer.

As the nucleating agent, a known nucleating agent can be used to further improve the moldability of the resin, that is, to increase the crystallization temperature and speed up the crystallization rate. Specific examples include dibenzylidene sorbitol-based nucleating agents, phosphate ester salt-based nucleating agents, rosin-based nucleating agents, benzoic acid metal salt-based nucleating agents, fluorinated polyethylene, sodium 2,2-methylenebis(4,6-di-t-butylphenyl) phosphate, pimelic acid and its salt, 2,6-naphthalenedicarboxylic acid dicyclohexylamide, and ethylene bis(stearamide).

The amount of the nucleating agent is preferably, but not limited to, 0.001 to 5 parts by mass based on 100 parts by mass in total of the 4-methyl-1-pentene polymer and the different polymer. The nucleating agent can be appropriately added during polymerization, after polymerization, or upon molding processing.

A known antiblocking agent can be used as the antiblocking agent. Specific examples include finely powdered silica, finely powdered aluminum oxide, finely powdered clay, powdered or liquid silicone resins, tetrafluoroethylene resins, finely powdered crosslinked resins, such as crosslinked acrylic or methacrylic resin powder, and amide lubricants. Preferred among these are finely powdered silica and crosslinked acrylic or methacrylic resin powder.

Examples of pigments include inorganic pigments (e.g., titanium oxide, iron oxide, chromium oxide, cadmium sulfide) and organic pigments (e.g., azo lake-based pigments, thioindigo-based pigments, phthalocyanine-based pigments, anthraquinone-based pigments). Examples of dyes include azo-based dyes, anthraquinone-based dyes, and triphenylmethane-based dyes. The total amount of these pigments and dyes is normally, but not limited to, 5% by mass or less, preferably 0.1 to 3% by mass based on the amount of the 4-methyl-1-pentene polymer.

Examples of fillers include glass fibers, carbon fibers, silica fibers, metal (e.g., stainless steel, aluminum, titanium, copper) fibers, carbon black, silica, glass beads, silicates (e.g., calcium silicate, talc, clay), metal oxides (e.g., iron oxide, titanium oxide, alumina), metal carbonates (calcium sulfate, barium sulfate), various metal (e.g., magnesium, silicon, aluminum, titanium, copper) powders, mica, and glass flakes.

Examples of lubricants include waxes (e.g., carnauba wax), higher fatty acids (e.g., stearic acid), higher alcohols (e.g., stearyl alcohol), and higher fatty acid amides (e.g., stearic acid amide).

Examples of plasticizers include aromatic carboxylic acid esters (e.g., dibutyl phthalate), aliphatic carboxylic acid esters (e.g., methyl acetyl ricinoleate), aliphatic dicarboxylic acid esters (e.g., adipic acid-propylene glycol-based polyester), aliphatic tricarboxylic acid esters (e.g., triethyl citrate), phosphoric acid triesters (e.g., triphenyl phosphate), epoxy fatty acid esters (e.g., epoxy butyl stearate), and petroleum resins.

Examples of mold release agents include lower (C1-4) alcohol esters of higher fatty acids (e.g., butyl stearate), polyhydric alcohol esters of fatty acids (C4-30) (e.g., hydrogenated castor oil), glycol esters of fatty acids, and liquid paraffin.

A known antioxidant can be used as the antioxidant. Specific examples include phenol-based antioxidants (e.g., 2,6-di-t-butyl-4-methylphenol), polycyclic phenol-based antioxidants (e.g., 2,2'-methylenebis(4-methyl-6-t-butylphenol)), phosphorus-based antioxidants (e.g., tri(2,4-di-t-butylphenyl)phosphate, tetrakis(2,4-dit-butylphenyl)-4,4-biphenylene diphosphate), sulfur-based antioxidants (e.g., dilauryl thiodipropionate), amine-based antioxidants (e.g., N,N-diisopropyl-p-phenylenediamine), and lactone-based antioxidants.

Examples of flame retardants include organic flame retardants (e.g., nitrogen-containing flame retardants, sulfur-containing flame retardants, silicon-containing flame retardants, phosphorus-containing flame retardants) and inorganic flame retardants (e.g., antimony trioxide, magnesium hydroxide, zinc borate, and red phosphorus).

Examples of ultraviolet absorbers include benzotriazole-based ultraviolet absorbers, benzophenone-based ultraviolet absorbers, salicylic acid-based ultraviolet absorbers, and acrylate-based ultraviolet absorbers.

Examples of antibacterial agents include quaternary ammonium salts, pyridine-based compounds, organic acids, organic acid esters, halogenated phenols, and organoiodine compounds.

Examples of surfactants include nonionic surfactants, anionic surfactants, cationic surfactants, or amphoteric surfactants. Examples of nonionic surfactants include polyethylene glycol-type nonionic surfactants such as higher alcohol ethylene oxide adducts, fatty acid ethylene oxide adducts, higher alkylamine ethylene oxide adducts, polypropylene glycol ethylene oxide adducts; polyethylene oxide; and polyhydric alcohol-type nonionic surfactants such as fatty acid esters of glycerol, fatty acid esters of pentaerythritol, fatty acid esters of sorbitol or sorbitan, alkyl ethers of polyhydric alcohols, and aliphatic amides of alkanolamines. Examples of anionic surfactants include sulfuric acid ester salts such as alkali metal salts of higher fatty acids, sulfonic acid salts such as alkylbenzene sulfonates, alkyl sulfonates, and paraffin sulfonates, and phosphoric acid ester salts such as higher alcohol phosphoric acid ester salts. Examples of cationic surfactants include quaternary ammonium salts such as alkyltrimethylammonium salts. Examples of amphoteric surfactants include amino acid-type amphoteric surfactants such as higher alkylaminopropionates, betaine-type amphoteric surfactants such as higher alkyl dimethyl betaine, and higher alkyl dihydroxyethyl betaine.

Examples of antistatic agents include the above surfactants, fatty acid esters, and polymer-type antistatic agents. Examples of fatty acid esters include esters of stearic acid and oleic acid. Examples of polymer-type antistatic agents include polyether ester amide.

Examples of heat stabilizers include conventionally known stabilizers such as amine-based stabilizers, phenol-based stabilizers, and sulfur-based stabilizers. Specific examples include: aromatic secondary amine-based stabilizers such as phenylbutylamine and N,N'-di-2-naphthyl-p-phenylenediamine; phenol-based stabilizers such as dibutylhydroxytoluene, tetrakis[methylene(3,5-di-t-butyl-4-hydroxy)hydrocinnamate]methane, and octadecyl 3-(3,5-di-t-butyl-4-hydroxyphenyl)propionate; thioether-based stabilizers such as bis[2-methyl-4-(3-n-alkylthiopropionyloxy)-5-t-butylphenyl] sulfide; dithiocarbamate-based stabilizers such as nickel dibutyldithiocarbamate; zinc salts of 2-mercaptobenzoylimidazole and 2-mercaptobenzimidazole; and sulfur-based stabilizers such as dilaurylthiodipropionate and distearylthiodipropionate. One of these stabilizers may be used alone, or two or more thereof may be used in combination.

An organic peroxide, for example, can be used as a crosslinking agent.

Examples of organic peroxides include dicumyl organic peroxide, di-tert-butyl organic peroxide, 2,5-dimethyl-2,5-di-(tert-butylperoxy)hexane, 2,5-dimethyl-2,5-di-(tert-butylperoxy)hexyne-3, 1,3-bis(tert-butylperoxyisopropyl)benzene, 1,1-bis(tert-butylperoxy)-3,3,5-trimethylcyclohexane, n-butyl-4,4-bis(tert-butylperoxy)valerate, benzoyl organic peroxide, p-chlorobenzoyl peroxide, 2,4-dichlorobenzoyl organic peroxide, tert-butyl peroxybenzoate, tert-butyl perbenzoate, tert-butyl peroxyisopropylcarbonate, diacetyl organic peroxide, lauroyl organic peroxide, and tert-butyl cumyl organic peroxide.

The organic peroxide is preferably used in an amount of 0.05 to 10 parts by mass based on 100 parts by mass in total of the 4-methyl-1-pentene polymer and the different polymer.

In the crosslinking processing with the organic peroxide, a crosslinking aid can be used such as sulfur, a peroxy crosslinking aid (e.g., p-quinonedioxime, p,p'-dibenzoylquinonedioxime, N-methyl-N-4-dinitrosoaniline, nitrosobenzene, diphenylguanidine, trimethylolpropane-N,N'-m-phenylene dimaleimide), divinylbenzene, triallyl cyanurate, a polyfunctional methacrylate monomer (e.g., ethylene glycol dimethacrylate, diethylene glycol dimethacrylate, polyethylene glycol dimethacrylate, trimethylolpropane trimethacrylate, allyl methacrylate), or a polyfunctional vinyl monomer (e.g., vinyl butyrate, vinyl stearate).

By using any of the above compounds, a uniform and mild crosslinking reaction can be expected. In particular, divinylbenzene is suitably used. Divinylbenzene is easy to handle, exhibits good compatibility with polymers, and has the ability to solubilize organic peroxides, thereby functioning as a dispersant for organic peroxides. As a result, a uniform crosslinking effect can be achieved, leading to a dynamically heat-treated product with a well-balanced combination of flowability and physical properties.

The crosslinking aid is preferably used in an amount of 0.05 to 10 parts by mass based on 100 parts by mass in total of the 4-methyl-1-pentene polymer and the different polymer.

The polymethylpentene resin may have any melt flow rate (MFR) as measured under the conditions of a load of 5 kg and a temperature of 260°C in conformity with ASTM D1238. From the viewpoint of the appearance of the resulting molded article, the MFR is normally 1 g/10 min or higher, preferably 2 g/10 min or higher, more preferably 5 g/10 min or higher, while it is normally 400 g/10 min or lower, preferably 200 g/10 min or lower, more preferably 100 g/10 min or lower.

The melting point of the polymethylpentene resin is normally, but not limited to, 100°C or higher, preferably 150°C or higher, while it is normally 240°C or lower.

The meso diad isotacticity (meso diad fraction) of the polymethylpentene resin is normally, but not limited to, 85% or higher, preferably 90% or higher, more preferably 95% or higher, while it is normally 100% or lower.

The polymethylpentene resin preferably has a weight average molecular weight of 5.0 × 10⁴ or more, more preferably 1.0 × 10⁵ or more, while preferably 1.0 × 10⁶ or less, more preferably 7.0 × 10⁵ or less.

The molecular weight of a polymethylpentene resin is measured in polystyrene equivalent by gel permeation chromatography (GPC, column temperature: 140°C, eluent: 1,2,4-trichlorobenzene).

The polymethylpentene resin can be produced by a conventionally known method such as a method disclosed in Comparative Example 9 in WO 2006/054613.

Examples of the chlorine-based resin include a vinyl chloride resin, a chlorinated vinyl chloride resin, a chlorinated polyethylene resin, and polyvinylidene chloride. One or two or more of these can be used.

From the viewpoint of corrosion resistance, preferred are a vinyl chloride resin and a chlorinated vinyl chloride resin.

The vinyl chloride resin may be a vinyl chloride homopolymer or a copolymer of vinyl chloride and a different monomer.

Examples of the different monomer copolymerized with vinyl chloride include vinyl-based monomers. Specific examples include: α-olefins such as ethylene, propylene, butylene; vinyl esters such as vinyl acetate, vinyl caproate, vinyl laurate, and vinyl stearate; alkyl vinyl ethers such as 2-ethylhexyl vinyl ether, butyl vinyl ether, octyl vinyl ether, dodecyl vinyl ether, and phenyl vinyl ether; esters of acrylic acid or methacrylic acid such as ethyl acrylate, n-butyl acrylate, n-butyl methacrylate, 2-ethylhexyl methacrylate, and stearyl methacrylate; aromatic vinyls such as styrene and α-methylstyrene; halogenated olefins such as vinylidene chloride, vinyl fluoride, vinyl bromide, and propylene chloride; N-substituted maleimides such as N-t-butylmaleimide, N-phenylmaleimide, and N-cyclohexylmaleimide; acrylic derivatives such as acrylic acid, methacrylic acid, acrylonitrile, maleic anhydride, and itaconic anhydride. One of these is used or two or more thereof are used in combination.

The vinyl chloride resin preferably has an average degree of polymerization of 500 to 3000, particularly preferably 700 to 1300. When the average degree of polymerization is within the range of 500 to 3000, the melt viscosity of the vinyl chloride resin does not become too high, making it easy to mold the resin into a desired shape. The resulting molded article tends to easily have sufficient impact resistance and can easily satisfy the required properties. The average degree of polymerization of a vinyl chloride resin herein is measured by a method specified in JIS K 7367-2.

The vinyl chloride resin preferably has a chlorine content of 40% by mass or more, more preferably 50% by mass or more, while preferably 60% by mass or less.

The chlorine content of a chlorine-based resin herein is measured by heating and burning a sample in a glass tube with a flame of a gas burner to dehydrochlorinate and decompose the sample, absorbing the generated hydrochloric acid gas into distilled water, and performing neutralization titration with a 0.1 mol/L normal sodium hydroxide solution.

In order to improve the injection moldability, the vinyl chloride resin may be blended with a methyl methacrylate-based copolymer. The methyl methacrylate-based copolymer is a copolymer of methyl methacrylate and an acrylate ester. Examples of acrylate esters used here include methyl acrylate, ethyl acrylate, n-butyl acrylate, isobutyl acrylate, 2-ethylhexyl acrylate, ethyl methacrylate, n-butyl methacrylate, isobutyl methacrylate, and 2-ethylhexyl methacrylate. One of these is used or two or more thereof are used in combination. The methyl methacrylate-based copolymer is used in an amount of 0.1 to 5 parts by mass, preferably 0.5 to 2 parts by mass based on 100 parts by mass of the vinyl chloride resin.

If needed, the vinyl chloride-based resin composition may be blended with additives commonly used for vinyl chloride-based resins, such as stabilizers, plasticizers, modifiers, fillers, colorants, lubricants, processing aids, antioxidants, ultraviolet absorbers, heat resistance improvers, and smoke suppressants, to the extent that the purpose of the disclosure is not impaired.

Examples of stabilizers include: lead-based stabilizers such as tribasic lead sulfate, dibasic lead phosphite, basic lead sulfite, dibasic lead phthalate, lead white, and lead laurate or stearate; tin-based stabilizers such as butyltin malate, octyltin malate, din-alkyltin mercaptide, di-n-alkyltin dilaurate, dibutyltin dimaleate, dibutyltin lauryl mercaptide, dioctyltin-S,S'-bis(isooctylmercaptoacetate), dibutyltin bisisooctylthioglycolate, di-n-octyltin malate polymers, and dibutyltin mercaptopropionate; organometallic salt-based stabilizers and metal soap-based stabilizers such as laurate or stearate of calcium, cadmium, barium, or zinc; antimony-based stabilizers such as antimony mercaptocarboxylate or ester salts; phosphate-based stabilizers; epoxidized oil stabilizers such as epoxidized soybean oil and epoxidized linseed oil; hindered phenols such as BHT and bisphenols dimerized with, for example, sulfur or a methylene group, and ultraviolet absorbers such as salicylic acid esters, benzophenone, benzotriazole. Each of these may be used alone or two or more of these may be used in combination.

Examples of plasticizers include: phthalic acid esters such as dimethyl phthalate, diethyl phthalate, dibutyl phthalate, di-n-octyl phthalate (hereinafter referred to as DOP), diisodecyl phthalate, and butylbenzyl phthalate; aliphatic dibasic acid esters such as dibutyl adipate, di-n-hexyl adipate, and dibutyl sebacate; phosphoric acid esters such as tributyl phosphate, tri-2-n-ethylhexyl phosphate, tricresyl phosphate, and triphenyl phosphate; trimellitic acid esters such as tri-2-ethylhexyl trimellitate and tributyl trimellitate; glycol esters such as pentaerythritol esters and diethylene glycol benzoate; epoxidized vegetable oils such as epoxidized soybean oil and epoxidized linseed oil; citric acid esters such as acetyl tributyl citrate, acetyl trioctyl citrate, and tri-n-butyl citrate; tetra-n-octyl pyromellitate, polypropylene adipate, and other polyester-based plasticizers. One of these is used or two or more of these are used in combination.

Examples of modifiers include: impact modifiers such as ethylene/vinyl acetate copolymers, ethylene/ethyl acrylate copolymers, chlorinated polyethylene, methyl methacrylate/butadiene/styrene copolymers, acrylonitrile/butadiene/styrene copolymers, and acrylic rubber; heat resistance modifiers such as acrylonitrile/butadiene/α-methylstyrene copolymers, methyl methacrylate/acrylate ester copolymers, and other copolymers using maleimide; flame retardants such as antimony trioxide, aluminum hydroxide, sodium antimonate, phosphate esters and phosphorus compounds, chlorinated paraffins, chlorinated olefins, and hexabromobenzene; elastifiers such as partially crosslinked NBR, acrylic rubber, and polyurethane; foaming agents, antistatic agents, surfactants, and conductivity-imparting agents. Any one of these is selected and used or any two or more of these are selected and used in combination.

Examples of fillers include: carbonate-based fillers such as heavy calcium carbonate, light calcium carbonate, precipitated calcium carbonate, magnesium carbonate, and dawsonite; oxide-based fillers such as silica, diatomite, and titanium oxide; hydroxide-based fillers such as aluminum hydroxide and magnesium hydroxide; sulfate (sulfite)-based fillers such as calcium sulfate and barium sulfate; silicate-based fillers such as talc, clay, mica, and calcium silicate; carbon-based fillers such as carbon black and graphite; inorganic fiber-based fillers such as hollow or solid glass beads, glass short fibers, metal fibers, carbon short fibers, and carbon fibers; metal powder-based fillers such as iron powder and copper powder; and heat-resistant resins such as polyimide and silicone. One of these is used or two or more thereof are used in combination.

Any colorant can be selected and used from among those conventionally used for coloring plastics. Examples of such colorants include: inorganic colorants such as metal powders (e.g., aluminum powder and bronze powder), carbon salts (e.g., carbon black), oxides (e.g., titanium oxide, zinc white, and red iron oxide), sulfates (e.g., precipitated barium sulfate), carbonates (e.g., calcium carbonate and basic magnesium carbonate), silicates (e.g., clay and ultramarine), chromates (e.g., chrome yellow), aluminates (e.g., cobalt blue), and ferrocyan compounds (e.g., Prussian Blue); organic pigments such as azo pigments (e.g., toluidine red, permanent carmine FB, disazo yellow AAA, and lake red C), polycyclic pigments (e.g., phthalocyanine blue, indanthrone blue, and quinacridone red), dyeing lakes (e.g., Victoria Pure Blue BO lake and alkali blue toner), azine pigments, and fluorescent pigments, and dyes such as basic dyes, acid dyes, oil-soluble dyes, and disperse dyes. One of these is used or two or more of these are used in combination.

Examples of lubricants include: aliphatic hydrocarbon lubricants such as low molecular wax, polyethylene wax, paraffin wax, liquid paraffin; higher aliphatic alcohol-based lubricants such as stearyl alcohol; aliphatic amide-based lubricants such as stearic acid amide, palmitic acid amide, and methylene bisstearamide; fatty acid ester lubricants such as glyceryl monostearate, ethyl diaminostearate, and butyl stearate; metal soap, and silicone oil. One of these is used or two or more of these are used in combination.

The vinyl chloride resin and a different component can be mixed in the same process as that used for conventional vinyl chloride resins. Specifically, they are preferably dry-blended with a resin temperature during the blending maintained within the range of 100°C to 120°C using a mixer such as a Henschel mixer or a ribbon blender. In particular, a formulation containing a vinyl chloride resin and a different component is preferably fed to the mixer, blended at room temperature, and taken out from the mixer when the resin temperature rises to the range of 100°C to 120°C. At that time, the mixer may be subjected to temperature control. The formulation can be kneaded and granulated using, for example, a Banbury mixer, a mixing roll, a single screw or twin screw extruder in the same manner as in the case of conventional vinyl chloride resins. The formulation may be molded, without granulation, using an injection molding machine to provide a molded article.

The chlorinated vinyl chloride resin is normally produced by using a vinyl chloride resin as a raw material and chlorinating it in an aqueous medium or in a gas phase. In the former method, chlorine is supplied to the vinyl chloride resin dispersed in an aqueous medium, and chlorination by irradiation with a mercury lamp, thermal chlorination, or chlorination in the presence of a catalyst is carried out. In the latter method, the vinyl chloride resin is chlorinated in a gas phase under mercury lamp irradiation.

Non-limiting examples of the vinyl chloride resin before chlorination as a raw material include a vinyl chloride homopolymer, and a copolymer of vinyl chloride and a different copolymerizable monomer (e.g., ethylene, propylene, vinyl acetate, allyl chloride, allyl glycidyl ether, acrylate ester, vinyl ether).

The vinyl chloride resin before chlorination may have an average degree of polymerization of 600 to 1500, preferably 600 to 1300, more preferably 600 to 1200.

The degree of chlorination of the chlorinated vinyl chloride resin may be 62 to 70% by mass, preferably 63 to 70% by mass, more preferably 64 to 70% by mass.

From the viewpoint of impact resistance at low temperatures, MBS (a copolymer of methyl methacrylate, butadiene, and styrene) may be blended with the chlorinated vinyl chloride resin. The MBS preferably has a butadiene content of greater than 60% by mass. Examples of such an MBS include B56 available from Kaneka Corporation and BTAIIINX available from Kureha Corporation.

The MBS is preferably added in an amount of 1 to 9 parts by mass based on 100 parts by mass of the chlorinated vinyl chloride resin.

Additives commonly used for chlorinated vinyl chloride resins, such as processing aids, stabilizers, lubricants, fillers, and pigments, can be added to the chlorinated vinyl chloride resin to the extent that the purpose of the disclosure can be achieved.

The chlorinated polyethylene resin can be obtained by chlorinating polyethylene. The various methods of chlorinating polyethylene are generally classified into three types: solution chlorination, suspension chlorination, and bulk chlorination. Chlorination in an aqueous suspension or in an inert liquid is described, for example, in US 2592763 A and US 3454544 A. Bulk chlorination or chlorination in the absence of a liquid suspending agent or a solvent is described, for example, in US 2890213 A, US 4425206 A, and GB 834905 A.

The chlorinated polyethylene resin preferably has a chlorine content of 5 to 25% by mass. In this form, the chlorine content is more preferably 10% by mass or more, while it is more preferably 20% by mass or less.

The chlorinated polyethylene resin also preferably has a chlorine content of 50 to 85% by mass. In this form, the chlorine content is more preferably 60% by mass or more, while it is more preferably 75% by mass or less.

If needed, plasticizers may be added to the chlorinated polyethylene resin. An example of the plasticizer is a compound represented by the following formula: 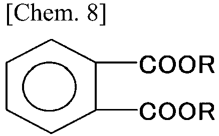 wherein R is a 2-propylheptyl group or a mixture of a 2-propylheptyl group and a 4-methyl-2-propylhexyl group. In terms of heat resistance and bleeding properties, R needs to contain 10 carbon atoms. In the case of the mixture, R preferably has a 4-methyl-2-propylhexyl group content of 30% by mass or less.

In order to further improve the flame retardancy, known heat stabilizers may be added to the chlorinated polyethylene resin, such as metal oxides (e.g., antimony trioxide, antimony pentoxide), bromine-based or chlorine-based organic substances (e.g., tetrabromobisphenol A, hexabromobenzene, chlorinated paraffins), tribasic lead sulfate, dibasic lead stearate, dibasic lead phosphite, and basic lead sulfite. The chlorinated vinyl resin may be blended with a resin component. Moreover, if needed, various known additives can be added, such as phenol-based antioxidants (e.g., 1,1,3-tris-(2-methyl-4-hydroxy-5-t-butylphenyl)butane, tetrakis-[methylene-3-(3',5'-di-t-butyl-4'-hydroxyphenyl)propionate]methane), crosslinking agents (e.g., di-t-butyl peroxide, t-butyl cumyl peroxide, 2,5-dimethyl-2,5-di(t-butylperoxy)hexane, 2,5-dimethyl-2,5-di(t-butylperoxy)hexyne-3), crosslinking aids (e.g., trimethylolpropane triacrylate), lubricants, ultraviolet absorbers, fillers, and colorants. In addition, the resin component may be crosslinked by irradiation with ionizing radiation or by addition of peroxides.

The chlorinated polyethylene resin can be molded using a common molding machine for molding thermoplastic resins such as a single-screw extruder, a twin-screw extruder, an injection molding machine, or a compression molding machine.

In a case where the above additives are used, for example, the chlorinated polyethylene resin and the additives are mixed at a certain ratio, dispersed uniformly using a mixer such as a ribbon blender, a cake mixer, or a high-speed mixer, kneaded at a temperature of 110°C to 180°C using a roll mill, a Banbury mixer, a pressure kneader, a single-screw extruder, a twin-screw extruder, a plastificator, a co-kneader, an injection molding machine, a compression molding machine, or the like, and pelletized and molded into a desired shape.

The vinylidene chloride resin is preferably a copolymer of vinylidene chloride and a monomer copolymerizable with vinylidene chloride (vinylidene chloride copolymer).

In terms of stability in heat melt extrusion and barrier properties against gas, vinylidene chloride preferably accounts for 50% by mass or more, more preferably 70% by mass or more, still more preferably 80% by mass or more, while preferably 98% by mass or less, more preferably 97% by mass or less, still more preferably 95% by mass or less of the total monomers in the vinylidene chloride resin.

Examples of monomers copolymerizable with vinylidene chloride include: vinyl halides such as vinyl chloride; alkyl acrylates such as methyl acrylate, ethyl acrylate, butyl acrylate, octyl acrylate, lauryl acrylate; alkyl methacrylates such as methyl methacrylate, ethyl methacrylate, butyl methacrylate; acrylic acid, methacrylic acid, maleic acid, itaconic acid, maleic anhydride, itaconic anhydride, alkyl maleates, alkyl itaconates, acrylonitrile, vinyl acetate, ethylene, propylene, isobutylene, and butadiene. One of these monomers may be used alone or two or more thereof may be used in combination.

The vinylidene chloride resin may have any weight average molecular weight (Mw). In terms of strength and thermal stability during melt molding, the Mw is preferably 50000 or more, more preferably 60000 or more, while it is preferably 150000 or less, more preferably 130000 or less, still more preferably 120000 or less.

The weight average molecular weight (Mw) of a vinylidene chloride resin herein is a value determined in polystyrene equivalent by gel permeation chromatography (GPC).

The polymerization method of the vinylidene chloride resin may be any known method such as a suspension polymerization method, an emulsion polymerization method, or a solution polymerization method. Preferred among these is a suspension polymerization method. Examples of suspension polymerization methods include a direct suspension method in which monomers are added to water containing a suspending agent dissolved therein and a suspension method disclosed in JP S62-280207 in which water containing a suspending agent dissolved therein is added to monomers to form a dispersion where the monomer phase serves as a continuous phase and the water as a dispersed phase, followed by transitioning to a dispersion where the monomer becomes a dispersed phase and the water becomes a continuous phase.

The vinylidene chloride resin may contain various known additives, if needed. Examples of additives include plasticizers, heat stabilizers, light stabilizers, organic lubricants, inorganic powders, and colorants.

The vinylidene chloride resin may be mixed with at least one thermoplastic resin selected from the group consisting of a polyolefin-based resin and a diene-based polyurethane resin.

The polyolefin-based resin used for mixing with the vinylidene chloride resin refers to a homopolymer of an olefin monomer (e.g., ethylene, propylene, butylene), a copolymer of two or more olefin monomers, or a copolymer of an olefin monomer and a non-olefin-based monomer. Specific examples include high density polyethylene, low density polyethylene, linear low density polyethylene, and very low density polyethylene prepared using Ziegler-based multi-site catalysts, and ethylene/α-olefin copolymers prepared using single-site catalysts, and further include polypropylene, polybutylene, ethylene/propylene copolymers, ethylene/butylene copolymers, and ethylene/propylene/butylene copolymers. Also, polyolefin-based copolymers modified by copolymerization or graft polymerization with unsaturated carboxylic acids such as maleic acid, fumaric acid, and acrylic acid or derivatives such as the corresponding acid anhydrides can be used.

The diene-based polyurethane resin used for mixing with the vinylidene chloride resin refers to a thermoplastic polyurethane resin having a polydiene skeleton (or a diene skeleton). A thermoplastic polyurethane resin is typically a polyurethane resin with a soft segment (derived from a polyol such as a polymeric glycol) and a hard segment (derived from a polyisocyanate such as a diisocyanate). Upon reaction between a polyol and a polyisocyanate, a chain extender and/or a crosslinking agent may be used. Here, multiple types of polyols, polyisocyanates, chain extenders, and crosslinking agents may be used. Use of such a diene-based polyurethane resin can improve the low-temperature properties while maintaining the barrier properties of the vinylidene chloride resin.

At least one of the polyol or the polyisocyanate as a raw material of the diene-based polyurethane resin preferably has a polydiene skeleton (or a diene skeleton). More preferably, the polyol has a polydiene skeleton (or a diene skeleton). At least one of the polyol or the polyisocyanate as a raw material of the diene-based polyurethane resin preferably has a butadiene skeleton or an isoprene skeleton. More preferably, the diene-based polyurethane resin is a butadiene-based polyurethane resin having a butadiene skeleton.

Examples of the polyisocyanate as a raw material of the diene-based polyurethane resin include compounds such as methylene diisocyanate (HDI), tolylene diisocyanate (TDI), diphenylmethane diisocyanate, naphthalene diisocyanate, isophorone diisocyanate (IPDI), xylylene diisocyanate, and phenylene diisocyanate, and modified products, derivatives, mixtures, and polymer compounds thereof. The chain extender and/or the crosslinking agent may be, for example, ethylene glycol, butanediol, or propanediol.

The thermoplastic resin preferably includes at least one selected from the group consisting of a polyethylene resin, a polypropylene resin, an amorphous cycloolefin resin, a crystalline cycloolefin resin, a polymethylpentene resin, and a vinyl chloride resin, more preferably at least one selected from the group consisting of high density polyethylene, ultra high molecular weight polyethylene, a polypropylene resin, an amorphous cycloolefin resin, a crystalline cycloolefin resin, a polymethylpentene resin, and a vinyl chloride resin, still more preferably at least one selected from the group consisting of ultra high molecular weight polyethylene, a polypropylene resin, an amorphous cycloolefin resin, a crystalline cycloolefin resin, a polymethylpentene resin, and a vinyl chloride resin, further preferably at least one selected from the group consisting of a polypropylene resin, an amorphous cycloolefin resin, a crystalline cycloolefin resin, a polymethylpentene resin, and a vinyl chloride resin, further preferably at least one selected from the group consisting of a polypropylene resin, an amorphous cycloolefin resin, a crystalline cycloolefin resin, and a polymethylpentene resin, particularly preferably at least one selected from the group consisting of an amorphous cycloolefin resin, a crystalline cycloolefin resin, and a polymethylpentene resin.

The member of the disclosure may contain different components, if needed. Examples of the components include various known additives such as antioxidants, stabilizers, antistatic agents, lubricants, mold release agents, ultraviolet absorbers, dyes and pigments, reinforcing materials (e.g., glass fiber filler, carbon fiber filler), anti-drip agents, fillers, flame retardants, and elastomers for improving impact resistance.

According to one preferred embodiment, an antioxidant is used as the different component. Examples of antioxidants include amine-based antioxidants and phenol-based antioxidants as primary antioxidants. One or two or more of these can be used. Examples also include sulfur-based antioxidants and phosphorus-based antioxidants as secondary antioxidants. Combination use of a primary antioxidant and a secondary antioxidant is preferred. In particular, a combination of a phenol-based antioxidant and a phosphorus-based antioxidant is preferred.

The amount of the antioxidant is preferably 0 parts by mass or more, more preferably 0.1 parts by mass or more, particularly preferably 0.2 parts by mass or more, while it is preferably 5 parts by mass or less, particularly preferably 3 parts by mass or less, based on 100 parts by mass of the thermoplastic resin. Use of the antioxidant in an amount of more than 5 parts by mass is not preferred as it may cause bleeding.

The different components may be blended to the extent that the effects of the disclosure are not impaired. The amount of the different component is preferably 20% by mass or less, more preferably 10% by mass or less, still more preferably 5% by mass or less, further preferably 3% by mass or less, while it may be 0.01% by mass or more based on the thermoplastic resin.

The member of the disclosure comes into contact with a corrosive substance. The member may partly or entirely come into contact with a corrosive substance.

The corrosive substance may be any substance that is corrosive, and may be a substance that is corrosive to rubber, resin, metal, and the like. The corrosive substance may be liquid, solid, or gas. In order to more significantly achieve the effects of the disclosure, the corrosive substance is preferably liquid.

The corrosive substance preferably has a redox potential (vs. NHE) of -2.0 V or higher, more preferably -1.0 V or higher, still more preferably -0.5 V or higher, while preferably 3.0 V or lower, more preferably 2.5 V or lower, still more preferably 2.1 V or lower.

Examples of the corrosive substance include acidic substances, basic substances, oxidizing substances, organic solvents, and salt water.

Examples of the acidic substances include chemical solutions having a pH of 6 or less, preferably 5 or less, more preferably 4 or less. Specific examples include: acids such as sulfuric acid, hydrofluoric acid, nitric acid, phosphoric acid, and hydrochloric acid; mixtures of these acids; and mixtures of these acids and other substances (e.g., hydrogen peroxide).

Preferred among these is at least one selected from the group consisting of sulfuric acid, hydrofluoric acid, nitric acid, phosphoric acid, hydrochloric acid, a mixed acid of hydrofluoric acid and nitric acid, a mixed chemical solution of hydrogen peroxide water and hydrochloric acid, and a mixed chemical solution of hydrogen peroxide water and sulfuric acid, and more preferred is at least one selected from the group consisting of hydrofluoric acid, nitric acid, phosphoric acid, hydrochloric acid, a mixed acid of hydrofluoric acid and nitric acid, a mixed chemical solution of hydrogen peroxide water and hydrochloric acid, and a mixed chemical solution of hydrogen peroxide water and sulfuric acid.

Examples of the basic substances include chemical solutions having a pH of 8 or more, preferably 9 or more, more preferably 10 or more. Specific examples include: bases such as TMAH ([(CH₃)₄N]⁺[OH]⁻), an aqueous sodium hydroxide solution, and ammonia; mixtures of these bases; and mixtures of these bases and other substances (e.g., hydrogen peroxide).

Preferred among these is at least one selected from the group consisting of TMAH ([(CH₃)₄N]⁺[OH]⁻), an aqueous sodium hydroxide solution, ammonia water, and a mixed chemical solution of hydrogen peroxide water and ammonia water.

The basic substance may also be a chemical solution having a redox potential (vs. NHE) of -2.0 to 0 V, preferably -1.0 to 0 V, more preferably -0.5 to 0 V. Specific examples include: basic substances such as TMAH ([(CH₃)₄N]⁺[OH]⁻), an aqueous sodium hydroxide solution, ammonia water, hydroxylamine, hydrazine, hydrogen water, and sodium sulfite; and mixtures of these basic substances and other substances.

Preferred among these is at least one selected from the group consisting of TMAH ([(CH₃)₄N]⁺[OH]⁻), ammonia water, and a mixed chemical solution of hydrogen peroxide water and ammonia water.

The oxidizing substance may be a chemical solution having a redox potential (vs. NHE) of 0 to 3.0 V, preferably 0.5 to 2.5 V, more preferably 1.0 to 2.1 V. Specific examples include: sulfuric acid, nitric acid, hydrochloric acid, hydrogen peroxide water; and mixtures of these oxidizing substances and other substances (e.g., hydrofluoric acid).

Preferred among these is at least one selected from the group consisting of sulfuric acid, nitric acid, hydrochloric acid, hydrogen peroxide water, a mixed acid of hydrofluoric acid and nitric acid, a mixed chemical solution of hydrogen peroxide water and hydrochloric acid, and a mixed chemical solution of hydrogen peroxide water and sulfuric acid, and more preferred is at least one selected from the group consisting of nitric acid, hydrochloric acid, a mixed acid of hydrofluoric acid and nitric acid, a mixed chemical solution of hydrogen peroxide water and hydrochloric acid, and a mixed chemical solution of hydrogen peroxide water and sulfuric acid.

Examples of the organic solvents include: esters such as methyl acetate, ethyl acetate, propyl acetate, n-butyl acetate, and tert-butyl acetate; ketones such as acetone, methyl ethyl ketone, and cyclohexanone; aliphatic hydrocarbons such as hexane, cyclohexane, octane, nonane, decane, undecane, dodecane, and mineral spirits; aromatic hydrocarbons such as benzene, toluene, xylene, naphthalene, and solvent naphtha; alcohols such as methanol, ethanol, isopropyl alcohol, tert-butanol, and ethylene glycol monoalkyl ether; cyclic ethers such as tetrahydrofuran, tetrahydropyran, and dioxane; nitriles such as acetonitrile and propionitrile; amides such as dimethyl sulfoxide, N,N-dimethylformamide, and N,N-dimethylacetamide; halogenated hydrocarbons such as dichloromethane, dichloroethane, and chloroform; and mixtures of these.

Preferred among these are alcohols, and more preferred is isopropyl alcohol.

The corrosive substance preferably includes at least one selected from the group consisting of acidic substances, basic substances, oxidizing substances, organic solvents, and salt water, more preferably at least one selected from the group consisting of acidic substances, basic substances, oxidizing substances, and organic solvents, still more preferably at least one selected from the group consisting of acidic substances and basic substances.

The corrosive substance preferably includes at least one selected from the group consisting of sulfuric acid, hydrofluoric acid, nitric acid, phosphoric acid, hydrochloric acid, a mixed acid of hydrofluoric acid and nitric acid, a mixed chemical solution of hydrogen peroxide water and hydrochloric acid, a mixed chemical solution of hydrogen peroxide water and sulfuric acid, TMAH, an aqueous sodium hydroxide solution, ammonia water, a mixed chemical solution of hydrogen peroxide water and ammonia water, isopropyl alcohol, and salt water, more preferably at least one selected from the group consisting of hydrofluoric acid, nitric acid, phosphoric acid, hydrochloric acid, a mixed acid of hydrofluoric acid and nitric acid, a mixed chemical solution of hydrogen peroxide water and hydrochloric acid, a mixed chemical solution of hydrogen peroxide water and sulfuric acid, TMAH, an aqueous sodium hydroxide solution, a mixed chemical solution of hydrogen peroxide water and ammonia water, and isopropyl alcohol, still more preferably at least one selected from the group consisting of hydrofluoric acid, hydrochloric acid, a mixed acid of hydrofluoric acid and nitric acid, a mixed chemical solution of hydrogen peroxide water and sulfuric acid, and TMAH.

The member of the disclosure may consist of a portion (layer) containing the thermoplastic resin or have a portion (layer) containing the thermoplastic resin and a different portion (layer). In order to ensure corrosion resistance, the surface that comes into contact with the corrosive substance is preferably at least partly composed of a portion (layer) containing the thermoplastic resin. More preferably, the surface that comes into contact with the corrosive substance is entirely composed of a portion (layer) containing the thermoplastic resin.

The member of the disclosure is for use as at least one selected from the group consisting of an architectural finishing material member, a mobility member, an aerospace member, a medical member, a semiconductor member, and an information and communication member. From the viewpoint of excellent corrosion resistance and low metal elution, the member is preferably a semiconductor member, more preferably a member for a semiconductor manufacturing-related apparatus (an article for a semiconductor manufacturing-related apparatus).

The member of the disclosure containing a polypropylene resin is for use as at least one selected from the group consisting of an architectural finishing material member, a mobility member, an aerospace member, a medical member, a semiconductor member, and an information and communication member. From the viewpoint of excellent corrosion resistance and low metal elution, the member is preferably a semiconductor member, more preferably a member for a semiconductor manufacturing-related apparatus (an article for a semiconductor manufacturing-related apparatus).

The member of the disclosure containing an amorphous cycloolefin resin is for use as at least one selected from the group consisting of an architectural finishing material member, a mobility member, an aerospace member, a medical member, a semiconductor member, and an information and communication member. From the viewpoint of excellent corrosion resistance and low metal elution, the member is preferably a semiconductor member, more preferably a member for a semiconductor manufacturing-related apparatus (an article for a semiconductor manufacturing-related apparatus).

The member of the disclosure containing a crystalline cycloolefin resin is for use as at least one selected from the group consisting of an architectural finishing material member, a mobility member, an aerospace member, a medical member, a semiconductor member, and an information and communication member. From the viewpoint of excellent corrosion resistance and low metal elution, the member is preferably a semiconductor member, more preferably a member for a semiconductor manufacturing-related apparatus (an article for a semiconductor manufacturing-related apparatus).

The member of the disclosure containing a polymethylpentene resin is for use as at least one selected from the group consisting of an architectural finishing material member, a mobility member, an aerospace member, a medical member, a semiconductor member, and an information and communication member. From the viewpoint of excellent corrosion resistance and low metal elution, the member is preferably a semiconductor member, more preferably a member for a semiconductor manufacturing-related apparatus (an article for a semiconductor manufacturing-related apparatus).

Examples of the architectural finishing material member include architectural interior finishing materials such as baseboards, ceiling materials, and plumbing materials, and architectural exterior finishing materials such as waterproof sheets, waterproofing materials, exterior wall materials, and roofing materials.

Examples of the mobility member include parts used in ferries, trains, automobiles, motorcycles, drones, robots, etc.

Examples of the aerospace member include exterior and interior materials for aircraft, rockets, etc., wire covering members, cable protection members, jet engines, cabin interior materials, and parts thereof.

Examples of the medical member include members such as tubing components, chemical containers, sterilization containers, medical tools, laboratory and analytical instruments, and packaging materials.

Examples of the semiconductor member include process materials used in semiconductor manufacturing, and parts for a semiconductor manufacturing-related apparatus.

Examples of the information and communication member include parts of apparatuses such as wireless LAN transmitting and receiving circuits, circuit boards, and parts of apparatuses for optical communication.

Examples of the member of the disclosure include containers, piping materials, nozzles, tubes, tanks, fittings, valves, pumps, housings, spin chucks, O-rings, packings, gaskets, washers, sealing materials, nuts, bolts, films, bottles, wire coverings, hoses, pipes, sheets, rollers, cocks, connectors, filter housings, filter cages, flowmeters, wafer carriers, and wafer boxes.

The member of the disclosure can be suitably applied to at least one selected from the group consisting of containers, piping materials, nozzles, tubes, tanks, fittings, valves, pumps, spin chucks, O-rings, packings, gaskets, washers, and sealing materials because these all require corrosion resistance.

According to a preferred embodiment, the thermoplastic resin includes at least one selected from the group consisting of a polypropylene resin, an amorphous cycloolefin resin, a crystalline cycloolefin resin, and a polymethylpentene resin, and the member includes at least one selected from the group consisting of containers, piping materials, nozzles, tubes, tanks, fittings, valves, pumps, spin chucks, O-rings, packings, gaskets, washers, and sealing materials.

According to another preferred embodiment, the thermoplastic resin is a polyethylene resin having a melting point of 120°C or higher, and the member includes at least one selected from the group consisting of piping materials (other than those for transporting ultra pure water), nozzles, tubes, fittings, valves, pumps, spin chucks, O-rings, packings, gaskets, washers, and sealing materials.

Among these, the member of the disclosure is suitably applicable to at least one selected from the group consisting of containers, piping materials, nozzles, tubes, tanks, fittings, valves, pumps, and spin chucks, and particularly suitably applicable to containers, piping materials, nozzles, tubes, tanks, fittings, and valves.

The member of the disclosure is suitably applicable to the containers, piping materials, nozzles, tubes, tanks, fittings, valves, pumps, spin chucks, O-rings, packings, gaskets, and sealing materials (preferably containers, piping materials, nozzles, tubes, tanks, fittings, and valves, more preferably containers, piping materials, nozzles, tubes, tanks, and fittings) in a semiconductor manufacturing-related apparatus.

Among these, the member of the disclosure containing a polypropylene resin is suitably applicable to at least one selected from the group consisting of containers, piping materials, nozzles, tubes, tanks, fittings, valves, pumps, and spin chucks, and particularly suitably applicable to containers, piping materials, nozzles, tubes, tanks, fittings, and valves.

The member of the disclosure containing a polypropylene resin is suitably applicable to the containers, piping materials, nozzles, tubes, tanks, fittings, valves, pumps, spin chucks, O-rings, packings, gaskets, and sealing materials (preferably containers, piping materials, nozzles, tubes, tanks, fittings, and valves, more preferably containers, piping materials, nozzles, tubes, tanks, and fittings) in a semiconductor manufacturing-related apparatus.

Among these, the member of the disclosure containing a crystalline cycloolefin resin is suitably applicable to at least one selected from the group consisting of containers, piping materials, nozzles, tubes, tanks, fittings, valves, pumps, and spin chucks, and particularly suitably applicable to containers, piping materials, nozzles, tubes, tanks, fittings, and valves.

The member of the disclosure containing a crystalline cycloolefin resin is suitably applicable to the containers, piping materials, nozzles, tubes, tanks, fittings, valves, pumps, spin chucks, O-rings, packings, gaskets, and sealing materials (preferably containers, piping materials, nozzles, tubes, tanks, fittings, and valves, more preferably containers, piping materials, nozzles, tubes, tanks, and fittings) in a semiconductor manufacturing-related apparatus.

Among these, the member of the disclosure containing an amorphous cycloolefin resin is suitably applicable to at least one selected from the group consisting of containers, piping materials, nozzles, tubes, tanks, fittings, valves, pumps, and spin chucks, and particularly suitably applicable to containers, piping materials, nozzles, tubes, tanks, fittings, and valves.

The member of the disclosure containing an amorphous cycloolefin resin is suitably applicable to the containers, piping materials, nozzles, tubes, tanks, fittings, valves, pumps, spin chucks, O-rings, packings, gaskets, and sealing materials (preferably containers, piping materials, nozzles, tubes, tanks, fittings, and valves, more preferably containers, piping materials, nozzles, tubes, tanks, and fittings) in a semiconductor manufacturing-related apparatus.

Among these, the member of the disclosure containing a polymethylpentene resin is suitably applicable to at least one selected from the group consisting of containers, piping materials, nozzles, tubes, tanks, fittings, valves, pumps, and spin chucks, and particularly suitably applicable to containers, piping materials, nozzles, tubes, tanks, fittings, and valves.

The member of the disclosure containing a polymethylpentene resin is suitably applicable to the containers, piping materials, nozzles, tubes, tanks, fittings, valves, pumps, spin chucks, O-rings, packings, gaskets, and sealing materials (preferably containers, piping materials, nozzles, tubes, tanks, fittings, and valves, more preferably containers, piping materials, nozzles, tubes, tanks, and fittings) in a semiconductor manufacturing-related apparatus.

The piping material is not limited. The inner diameter is preferably 2 mm to 400 mm, more preferably 2 mm to 100 mm, particularly preferably 2 mm to 25 mm. Examples include a robust pipe, a flexible hose that can be fitted to the installation space, and a bellows pipe that is large in diameter but can be bent. The inside of the piping material is made of a material with cleanliness (less contamination of chemical solutions by extracted ions) and chemical resistance, and may be highly polished so as not to generate dust or disturb a liquid or gas flow.

Depending on the chemical solution to be flowed, such as an organic solvent, antistatic properties may be required to prevent static electricity buildup. Conductive fillers (e.g., carbon black, carbon nanotubes) may be blended to provide antistatic properties to the extent that cleanliness is not disturbed.

The nozzle is not limited. The tip of the nozzle may be precisely machined to match the size and shape of the part. In addition, since the nozzle comes into contact with another part, a highly hard and durable material that is resistant to friction and bending can be used.

The tube is not limited. The tube diameter is preferably 2 mm to 400 mm, more preferably 2 mm to 100 mm, particularly preferably 2 mm to 25 mm. Materials having stress crack resistance, chemical resistance, excellent mechanical strength, and cleanliness (less contamination of chemical solutions by extracted ions) are used. Depending on the chemical solution to be flowed, such as an organic solvent, antistatic properties may be required to prevent static electricity buildup. Conductive fillers (e.g., carbon black, carbon nanotubes) may be blended to provide antistatic properties to the extent that cleanliness is not disturbed.

The container and the tank are not limited. They may be subjected to precision cleaning (e.g., washing with water, immersion in acetic acid, immersion in hydrochloric acid, immersion in nitric acid, wiping, washing with pure water) to remove dirt or residue. Packaging after cleaning may be carried out in a clean room or clean booth environment.

The fitting and the valve are not limited. They are required to be oil-free, particle-free, dead space-free, and external leakage-free, and have a size preferably in the range of 3.2 to 40 mm in diameter, more preferably in the range of 3.2 to 12.7 mm in diameter.

The pump is not limited. It may be required to have retractability or flexibility.

The spin chuck is not limited. It may be required to have hardness, corrosion resistance, and dimensional stability, and may be provided with electrical conductivity.

The O-ring and the sealing material are not limited. The material thereof may be required to have properties including excellent elasticity, good compression set, high abrasion resistance, excellent heat resistance, resistance to the liquid or gas to be used, and long life. In particular, an O-ring used in a semiconductor manufacturing-related apparatus is used in harsh chemical environments, such as being exposed to various plasmas, and therefore may be required to have high heat resistance, chemical resistance, and plasma resistance. The compression set at 100°C for 72 hours is preferably 25% or less, more preferably 20% or less, still more preferably 15% or less, further preferably 10% or less.

The packing and the gasket are not limited. They may be required to have good compression set, a low coefficient of friction and excellent abrasion resistance. They may also be required to have heat resistance, cold resistance, pressure resistance, and chemical resistance to prevent leakage. The compression set at 100°C for 72 hours is preferably 25% or less, more preferably 20% or less, still more preferably 15% or less, further preferably 10% or less.

The washer is not limited. It may be required to have durability, corrosion resistance, and rust resistance, assuming its use in, for example, a clean room.

The member of the disclosure can be used for the following applications, for example.

### <Architectural finishing materials>

Examples include: furniture surface materials and building interior materials for walls, ceilings, and floors;
building exterior materials such as exterior walls (sidings), fences, roofs, gates, and bargeboards;
surface decorative materials such as window frames, doors, handrails, thresholds, and lintels;
membrane materials (e.g., roofing materials, ceiling materials, exterior wall materials, interior wall materials, and covering materials) for membrane buildings (e.g., sports facilities, horticultural facilities, atriums);
board materials for outdoor use (e.g., soundproof walls, windbreak fences, wave-breaking fences, carport roofs, shopping malls, walkway walls, and roofing materials);
architectural materials such as tent fabrics for warehouse tents, membrane materials for sunshades, partial roofing materials for daylighting, window materials as alternatives to glass, flame-retardant partition membranes, curtains, exterior wall reinforcements, waterproof membranes, smoke-control membranes, non-combustible transparent partitions, and road reinforcement materials;
weather-resistant covers such as agricultural films, various roofing materials, side walls, and the like; and
coating materials for glass products such as non-combustible fireproof safety glass.

Among these, the member of the disclosure can be particularly suitably used in membrane materials of membrane buildings; board materials for outdoor use; architectural materials such as tent fabrics for warehouse tents, membrane materials for sunshades, partial roofing materials for daylighting, window materials as alternatives to glass, flame-retardant partition membranes, curtains, exterior wall reinforcements, waterproof membranes, smoke-control membranes, non-combustible transparent partitions, and road reinforcement materials; and weather-resistant covers such as agricultural films, various roofing materials, and side walls, because these all require corrosion resistance.

When the member of the disclosure is used for any of the above applications, from the viewpoint of corrosion resistance, weather resistance, and economic efficiency, the thermoplastic resin preferably includes at least one selected from the group consisting of a polyethylene resin, a polypropylene resin, an amorphous cycloolefin resin, a crystalline cycloolefin resin, and a polymethylpentene resin.

### <Mobility>

Examples include: O-rings (including square O-rings), tubes, packings, valve cores, hoses, sealing materials, and diaphragms used in automotive fuel systems and peripheral devices (e.g., injector O-rings, injector packings, fuel pump O-rings, diaphragms, fuel hoses, filler hoses, and evaporative hoses) (these may be resistant to sour gasoline, alcohol-based fuels, and fuels containing gasoline additives such as methyl tert-butyl ether and amines);
hoses and sealing materials (e.g., ATF hoses) used in automotive automatic transmissions;
gaskets, shaft seals, valve stem seals, sealing materials, and hoses used in automotive engines and peripheral devices (e.g., carburetor flange gaskets, engine head gaskets, metal gaskets, crankshaft seals, camshaft seals, valve stem seals, manifold packings, oil hoses);
oxygen sensors for automotive engines;

Other automotive parts such as automotive brake hoses, air conditioner hoses, radiator hoses, radiator tanks, chemical tanks, bellows, spacers, rollers, gasoline tanks, bumpers, door trims, instrument panels, and electric wire covering materials;
O-rings (including square O-rings), tubes, packings, valve cores, hoses, sealing materials, and diaphragms used in ship fuel systems and peripheral devices; and
piping corrosion protection tapes, such as tapes to be wrapped around piping on ship decks.

Among these, the member of the disclosure can be particularly suitably used in tubes, valve cores, hoses, and diaphragms used in automotive fuel systems and peripheral devices; other automotive parts such as automotive brake hoses, air conditioner hoses, radiator hoses, radiator tanks, chemical tanks, bellows, spacers, rollers, gasoline tanks, bumpers, door trims, instrument panels, and electric wire covering materials; hoses used in automotive automatic transmissions; and tubes, valve cores, hoses, and diaphragms used in ship fuel systems and peripheral devices, because these all require corrosion resistance.

When the member of the disclosure is used for any of the above applications, from the viewpoint of corrosion resistance and oil resistance, the thermoplastic resin preferably includes at least one selected from the group consisting of a polyethylene resin, a polypropylene resin, an amorphous cycloolefin resin, a crystalline cycloolefin resin, and a polymethylpentene resin.

### <Aerospace>

Examples include O-rings (including square O-rings), tubes, packings, valve cores, hoses, sealing materials, and diaphragms used in fuel systems of aircraft and rockets and peripheral devices thereof.

Among these, the member of the disclosure can be particularly suitably used in tubes, valve cores, hoses, and diaphragms used in fuel systems of aircraft and rockets and peripheral devices thereof, because these all require corrosion resistance.

When the member of the disclosure is used for any of the above applications, from the viewpoint of corrosion resistance and heat resistance, the thermoplastic resin preferably includes at least one selected from the group consisting of an amorphous cycloolefin resin, a crystalline cycloolefin resin, and a polymethylpentene resin.

### <Medical>

Examples include: tubing components such as medical infusion tubes, blood collection tubes, drainage tubes, catheters, catheter connectors, stents, tubes, fittings, tube connectors, valves, and filters;
liquid, powder, or solid chemical containers such as packages, bottles, bottle caps, vials, ampules, prefilled syringes, infusion bags, infusion bag connectors, sealed medicine bags, press-through packages, and eye drop containers;
sample containers such as urine collection bags, sampling test tubes for blood testing, blood collection tubes, test cells, and specimen containers;
sterile containers for medical items such as scalpels, forceps, gauze, and contact lenses;
housings for electronic devices such as medical sensors, cardiac devices, and pacemakers;
medical devices such as inhalation masks, syringes, syringe rods, injection needles, surgical trays, protective caps, rubber stoppers, and endoscopes;
laboratory and analytical tools such as beakers, petri dishes, flasks, test tubes, and centrifuge tubes;
medical optical components such as plastic lenses for medical testing; and
artificial organs and their components, including denture bases, dentures, artificial hearts, dental implants, artificial bones, and artificial joints.

Among these, from the viewpoint of chemical resistance and heat resistance, the member of the disclosure can be particularly suitably used in medical infusion tubes, blood collection tubes, drainage tubes, catheters, tubes, fittings, tube connectors, valves, bottles, bottle caps, vials, ampules, prefilled syringes, infusion bags, urine collection bags, sampling test tubes for blood testing, blood collection tubes, test cells, specimen containers, sterile containers, syringes, syringe rods, surgical trays, and protective caps.

When the member of the disclosure is used for any of the above applications, the thermoplastic resin preferably includes at least one selected from the group consisting of a polyethylene resin, a polypropylene resin, an amorphous cycloolefin resin, a crystalline cycloolefin resin, and a polymethylpentene resin.

### <Information and communications>

Examples include: insulating boards in high-frequency circuits, insulating materials for connecting parts, and printed wiring boards;
bases of high-frequency vacuum tubes and antenna covers;
wire coating materials for coaxial cables and LAN cables;
coating materials for optical fibers;
displays such as liquid crystal displays; and
mobile phone components.

Among these, the member of the disclosure is particularly suitably used in insulating boards in high-frequency circuits, insulating materials for connector parts, printed wiring boards, bases of high-frequency vacuum tubes and antenna covers, wire coating materials for coaxial cables and LAN cables, and coating materials for optical fibers, because these all require corrosion resistance.

When the member of the disclosure is used for any of the above applications, the thermoplastic resin preferably includes at least one selected from the group consisting of a polyethylene resin, a polypropylene resin, an amorphous cycloolefin resin, a crystalline cycloolefin resin, and a polymethylpentene resin.

### <Semiconductor>

Examples include: chemical solution transfer components used in semiconductor factories and semiconductor manufacturing-related apparatuses, such as chemical tanks, containers, housings, piping materials, O-rings (including square O-rings), tubes, packings, valve cores, hoses, sealing materials, rolls, gaskets, washers, diaphragms, nozzles, fittings, coatings, and pipe linings;
chemical stoppers and packaging films for chemicals;
waste liquid transfer components such as tanks, containers, piping materials, tubes, hoses, fittings, and nozzles for waste liquid transfer;
high-temperature liquid transfer components such as containers, tubes, and hoses for high-temperature liquid transfer; and
steam piping components such as tubes and hoses for steam piping.

Among these, from the viewpoint of chemical resistance and heat resistance, the member of the disclosure is suitably used in chemical solution transfer components used in semiconductor manufacturing-related apparatuses, such as chemical tanks, containers, housings, piping materials, O-rings (including square O-rings), tubes, packings, valve cores, hoses, sealing materials, gaskets, washers, diaphragms, nozzles, and fittings; and waste liquid transfer components such as containers, piping materials, tubes, and hoses for waste liquid transfer.

When the member of the disclosure is used in any of the above applications, from the viewpoint of chemical resistance and heat resistance, the thermoplastic resin preferably includes at least one selected from the group consisting of a polypropylene resin, an amorphous cycloolefin resin, a crystalline cycloolefin resin, a polymethylpentene resin, and a vinyl chloride resin, more preferably at least one selected from the group consisting of a polypropylene resin, an amorphous cycloolefin resin, a crystalline cycloolefin resin, and a polymethylpentene resin, particularly preferably at least one selected from the group consisting of an amorphous cycloolefin resin, a crystalline cycloolefin resin, and a polymethylpentene resin.

Examples of a semiconductor manufacturing apparatus of the semiconductor manufacturing-related apparatus include photolithography process apparatuses (coating apparatuses, resist stripping apparatuses, developing apparatuses (developers), baking apparatuses, descumming apparatuses), thin film formation/etching/cleaning/drying apparatuses (vacuum deposition apparatuses, sputtering apparatuses, CVD apparatuses, cleaning apparatuses, etching apparatuses, drying apparatuses, scrub cleaning apparatuses), inspection/evaluation and manufacturing apparatuses (defect repair apparatuses), wafer processing apparatuses (wafer marking apparatuses), resist processing apparatuses (coating apparatuses, developing apparatuses, resist stripping apparatuses, ashing apparatuses, baking apparatuses), etching apparatuses (dry etching apparatuses, wet etching apparatuses), cleaning/drying apparatuses (dry cleaning apparatuses, wet cleaning apparatuses, scrub cleaning apparatuses, drying apparatuses), heat treatment apparatuses (oxidation apparatuses, diffusion apparatuses, annealing apparatuses), ion implantation apparatuses (high current ion implantation apparatuses, medium current ion implantation apparatuses, high energy ion implantation apparatuses), thin film formation apparatuses, CVD apparatuses (high-pressure CVD apparatuses, SACVD apparatuses, low-pressure CVD apparatuses, plasma CVD apparatuses, metal CVD apparatuses, ALD apparatuses), sputtering apparatuses, other thin film formation apparatuses (vacuum deposition apparatuses, silicon epitaxial growth apparatuses, compound semiconductor epitaxial apparatuses (MOCVD apparatuses, MBE apparatuses), plating apparatuses), inspection/evaluation apparatuses (Auger electron spectroscopy apparatuses), CMP apparatuses (CMP apparatuses, CMP cleaning apparatuses), other processing apparatuses (wafer marking apparatuses, back grinding machines, bump plating apparatuses, back grinder tape applicators, back grinders, back grinder tape peelers), dicing apparatuses (dicing apparatuses, wafer mounting apparatuses), bonding apparatuses (die bonding apparatuses, hybrid bonding apparatuses, wire bonding apparatuses, inner lead bonding apparatuses, outer lead bonding apparatuses, flip chip bonding apparatuses), packaging apparatuses (molding apparatuses, deburring apparatuses, solder processing apparatuses), other testing apparatuses (electron beam testing apparatuses, laser beam testing apparatuses), probing apparatuses (probers), handlers, aging apparatuses (aging apparatuses, burn-in apparatuses, IC insertion apparatuses, IC extraction apparatuses), and other inspection apparatuses (thermal test apparatuses, temperature and humidity test apparatuses, pressure cooker apparatuses, laser processing systems, various life test apparatuses).

Examples of an apparatus related to a semiconductor manufacturing-related apparatus include various transport apparatuses (intra-process wafer transport apparatuses, inter-process wafer transport apparatuses, stockers), pure water/chemical liquid apparatuses (pure water production apparatuses, ultrafiltration apparatuses, reverse osmosis apparatuses, sterilization apparatuses, chemical supply apparatuses, slurry supply apparatuses, chemical purification apparatuses, waste liquid treatment apparatuses), various gas apparatuses (gas generation apparatuses, gas purification apparatuses, gas mixing apparatuses, gas detection apparatuses, exhaust gas treatment apparatuses), clean room apparatuses (clean benches, clean tunnels, thermal chambers, environmental test apparatuses, air showers, pass boxes), and other manufacturing-related apparatuses (various jig cleaning/drying apparatuses, flow control instruments, various taping apparatuses, various packaging apparatuses, measuring instruments for liquid/various gases).

In order to take advantage of chemical resistant properties, preferred examples of a semiconductor manufacturing apparatus in which a corrosive substance is used include, but are not limited to, photolithography process apparatuses (coating apparatuses, resist stripping apparatuses, developing apparatuses (developers), descumming apparatuses), thin film formation/etching/cleaning/drying apparatuses (vacuum deposition apparatuses, CVD apparatuses, cleaning apparatuses, etching apparatuses, drying apparatuses, scrub cleaning apparatuses), inspection/evaluation and manufacturing apparatuses (defect repair apparatuses), resist processing apparatuses (coating apparatuses, developing apparatuses, resist stripping apparatuses, ashing apparatuses), etching apparatuses (dry etching apparatuses, wet etching apparatuses), cleaning/drying apparatuses (wet cleaning apparatuses, scrub cleaning apparatuses, drying apparatuses), CVD apparatuses (high-pressure CVD apparatuses, SACVD apparatuses, low-pressure CVD apparatuses, plasma CVD apparatuses, metal CVD apparatuses, ALD apparatuses), other thin film formation apparatuses (vacuum deposition apparatuses, silicon epitaxial growth apparatuses, compound semiconductor epitaxial apparatuses (MOCVD apparatuses, MBE apparatuses), plating apparatuses), CMP apparatuses (CMP apparatuses, CMP cleaning apparatuses), and other processing apparatuses (bump plating apparatuses), aging apparatuses (aging apparatuses, burn-in apparatuses, IC insertion apparatuses, IC extraction apparatuses) and other inspection apparatuses (various life test apparatuses).

Preferred examples of an apparatus related to a semiconductor manufacturing apparatus include pure water/chemical liquid apparatuses (chemical supply apparatuses, slurry supply apparatuses, chemical purification apparatuses, waste liquid treatment apparatuses), various gas apparatuses (gas generation apparatuses, gas purification apparatuses, gas mixing apparatuses, gas detection apparatuses, exhaust gas treatment apparatuses), clean room apparatuses (thermal chambers, environmental test apparatuses), and other manufacturing-related apparatuses (various jig cleaning/drying apparatuses, flow control instruments, various packaging apparatuses, measuring instruments for liquid/various gases).

As described above, the member of the disclosure can be suitably used as a member for a semiconductor manufacturing-related apparatus (an article for a semiconductor manufacturing-related apparatus). Owing to its excellent chemical resistance, the member of the disclosure is more suitably used as a member constituting a semiconductor manufacturing-related apparatus in which a chemical is used, particularly as a member that comes into contact with a chemical.

The chemical is not limited. Examples thereof include chemicals used in semiconductor manufacturing-related apparatuses. One chemical may be used alone or two or more chemicals may be used in combination.

Specific examples of the chemical include at least one selected from the group consisting of TMAH ([(CH₃)₄N]⁺[OH]⁻), an aqueous sodium hydroxide solution, sulfuric acid, isopropyl alcohol, hydrofluoric acid, a mixed acid of hydrofluoric acid and nitric acid, a sulfuric acid hydrogen peroxide mixture (SPM), SC1 (a mixture of NH₄OH, H₂O₂, and H₂O), SC2 (a mixture of HCl, H₂O₂, and H₂O), phosphoric acid, and hydrochloric acid. Preferred among these are TMAH, isopropyl alcohol, hydrofluoric acid, a mixed acid of hydrofluoric acid and nitric acid, SPM, SC1, SC2, phosphoric acid, and hydrochloric acid. More preferred are TMAH, hydrofluoric acid, a mixed acid of hydrofluoric acid and nitric acid, and SPM.

The chemical may also include at least one selected from the group consisting of silicon-based gases, arsenic-based gases, phosphorus-based gases, boron-based gases, metal hydride gases, metal alkyl gases, halogenated hydrocarbon gases, halogen-halide gases, nitrogen oxide gases, hydrogen sulfide gas, ammonia gas, trimethylamine gas, propane gas, trimethylaluminum gas, hydrogen gas, helium gas, nitrogen gas, oxygen gas, argon gas, and carbon dioxide gas. The chemical may also preferably include at least one selected from the group consisting of silicon-based gases, arsenic-based gases, phosphorus-based gases, boron-based gases, metal hydride gases, metal alkyl gases, halogenated hydrocarbon gases, halogen-halide gases, nitrogen oxide gases, hydrogen sulfide gas, ammonia gas, trimethylamine gas, propane gas, trimethylaluminum gas, hydrogen gas, helium gas, nitrogen gas, oxygen gas, argon gas, and carbon dioxide gas.

Examples of the silicon-based gases include monosilane, dichlorosilane, trichlorosilane, silicon tetrachloride, silicon tetrafluoride, and disilane.

Examples of the arsenic-based gases include arsine, arsenic (III) fluoride, arsenic (V) fluoride, arsenic (III) chloride, and arsenic (V) chloride.

Examples of the phosphorus-based gases include phosphine, phosphorus (III) fluoride, phosphorus (V) fluoride, phosphorus (III) chloride, phosphorus (V) chloride, and phosphorus oxychloride.

Examples of the boron-based gases include diborane, boron trifluoride, boron trichloride, and boron tribromide.

Examples of the metal hydride gases include hydrogen selenide, monogermane, hydrogen telluride, stibine, and tin hydride.

Examples of the metal alkyl gases include trialkylgallium and trialkylindium.

Examples of the halogenated hydrocarbon gases include tetrafluoromethane, trifluoromethane, difluoromethane, hexafluoropropane, octafluoropropane, and octafluorocyclobutane.

Examples of the halogen-halide gases include fluorine, hydrogen fluoride, chlorine, hydrogen chloride, carbon tetrachloride, hydrogen bromide, sulfur hexafluoride, nitrogen trifluoride, sulfur tetrafluoride, tungsten (VI) fluoride, molybdenum (VI) fluoride, germanium tetrachloride, tin (IV) chloride, antimony (V) chloride, tungsten (VI) chloride, and molybdenum hexachloride.

Examples of the nitrogen oxide gases include nitrogen monoxide, nitrogen dioxide, and dinitrogen monoxide.

Preferred among these are ammonia gas, nitrogen trifluoride, dinitrogen monoxide, monosilane, and octafluorocyclobutane, and more preferred are ammonia gas, nitrogen trifluoride, and dinitrogen monoxide.

The member for a semiconductor manufacturing-related apparatus (article for a semiconductor manufacturing-related apparatus) may consist of a portion (layer) containing the thermoplastic resin or have a portion (layer) containing the thermoplastic resin and a different portion (layer). In order to ensure chemical resistance, the surface that comes into contact with the chemical is preferably at least partly composed of a portion (layer) containing the thermoplastic resin. More preferably, the surface that comes into contact with the chemical is entirely composed of a portion (layer) containing the thermoplastic resin.

When a test piece (size: 10 mm × 50 mm × 2 mm) including the member of the disclosure is immersed in each of three chemical solutions (1), (6), and (7) described later for one week, a relative value of a mass of the test piece after the immersion, with a mass before the immersion taken as 100, is preferably 95 or more and 105 or less for all the three chemical solutions. The member satisfying this requirement has excellent corrosion resistance.

The relative value is more preferably 97 or greater, still more preferably 98 or greater, further preferably 99 or greater, while more preferably 103 or smaller, still more preferably 102 or smaller, further preferably 101 or smaller. The relative value is ideally (most preferably) 100.

When a test piece (size: 10 mm × 50 mm × 2 mm) including the member of the disclosure is immersed in each of 10 chemical solutions (1) to (10) described later for one week, a relative value of a mass of the test piece after the immersion, with a mass before the immersion taken as 100, is more preferably within the above range for all the 10 chemical solutions.

When a test piece (size: 10 mm × 50 mm × 2 mm) including the member of the disclosure is immersed in each of 10 chemical solutions (1) to (10) described later for one week and a relative value of a mass of the test piece after the immersion, with a mass before the immersion taken as 100, is measured for each chemical solution, an average of the relative values for the 10 chemical solutions is preferably 95 or more and 105 or less, and a standard deviation thereof is preferably 20 or less. The member satisfying this requirement has excellent corrosion resistance.

The average of the relative values is more preferably 97 or greater, still more preferably 98 or greater, further preferably 99 or greater, while more preferably 103 or smaller, still more preferably 102 or smaller, further preferably 101 or smaller. The average of the relative values is ideally (most preferably) 100.

The standard deviation of the relative values is more preferably 10 or less, still more preferably 5 or less, further preferably 3 or less, further preferably 2 or less, particularly preferably 1 or less, while it may be 0 or more. The standard deviation of the relative values is ideally (most preferably) 0.

The chemical solutions used for the immersion of the test piece are listed below:
(1) 25% by mass TMAH ([(CH₃)₄N]⁺[OH]⁻) (80°C);
(2) 98% by mass sulfuric acid (90°C);
(3) 100% by mass isopropyl alcohol (80°C);
(4) 49% by mass hydrofluoric acid (70°C);
(5) a mixed acid of hydrofluoric acid and nitric acid (a mixture of 49% by mass hydrofluoric acid and 69 to 71% by mass nitric acid in a volume ratio of 1:5) (20°C);
(6) a mixed acid of hydrofluoric acid and nitric acid (a mixture of 49% by mass hydrofluoric acid and 69 to 71% by mass nitric acid in a volume ratio of 1:100) (20°C);
(7) SPM (a mixture of 98% by mass sulfuric acid and 30 to 36% by mass hydrogen peroxide water in a volume ratio of 2:1) (80°C);
(8) SC1 (a mixture of 25 to 28% by mass ammonia water, 30 to 36% by mass hydrogen peroxide water, and deionized water in a volume ratio of 1:1:5) (70°C);
(9) SC2 (a mixture of 35 to 37% by mass hydrochloric acid, 30 to 36% by mass hydrogen peroxide water, and deionized water in a volume ratio of 1:1:4) (70°C); and
(10) 85% by mass phosphoric acid (80°C).

When a test piece (size: 10 mm × 50 mm × 2 mm) including the member of the disclosure is immersed in 3.6% by mass hydrochloric acid at 23°C for one week, the elution amounts (based on mass) of 16 metal elements (Li, Na, Mg, Al, K, Ca, Ti, Cr, Mn, Fe, Ni, Cu, Zn, Ag, Cd, and Pb) are each preferably 20 ppb or less, more preferably 10 ppb or less, still more preferably 6 ppb or less, further preferably 3 ppb or less, further preferably 2 ppb or less, further preferably 1.6 ppb or less, particularly preferably 1 ppb or less. The elution amount is ideally (most preferably) 0 ppb and may be equal to or greater than the detection limit.

When a test piece (size: 10 mm × 50 mm × 2 mm) including the member of the disclosure is immersed in each of the 10 chemical solutions (1) to (10) described above and a change in color before and after the immersion is evaluated based on the yellowness index (ΔYI), the number of chemical solutions in which ΔYI changes by 3 or more is preferably 4 or less, more preferably 3 or less, still more preferably 2 or less, while it may be 0 or more or 1 or more.

In terms of heat resistance, the deflection temperature under load of the member of the disclosure is preferably 50°C or higher, more preferably 60°C or higher, still more preferably 70°C or higher, further preferably 85°C or higher, particularly preferably 120°C or higher, while it may be 200°C or lower or 150°C or lower, at a load of 1.82 MPa.

The deflection temperature under load is measured in conformity with ASTM D648 at a load of 1.82 MPa.

The member of the disclosure can be produced, for example, by molding materials including the thermoplastic resin and the above-described different components, if needed. Any known molding method can be employed, such as extrusion molding, injection molding, transfer molding, blow molding, inflation molding, and compression molding.

The disclosure also relates to a semiconductor manufacturing-related apparatus including the above-described member of the disclosure mounted thereon. Use of the member of the disclosure can provide the apparatus with excellent corrosion resistance.

The semiconductor manufacturing-related apparatus of the disclosure is preferably the one described above as the semiconductor manufacturing apparatus and related apparatus of the semiconductor manufacturing-related apparatus. Moreover, the semiconductor manufacturing-related apparatus of the disclosure preferably includes at least one selected from the group consisting of semiconductor manufacturing apparatuses and semiconductor manufacturing apparatus-related apparatuses.

The semiconductor manufacturing apparatus preferably includes at least one selected from the group consisting of a photolithography process apparatus, a thin film formation/etching/cleaning/drying apparatus, an inspection/evaluation and manufacturing apparatus, a resist processing apparatus, an etching apparatus, a cleaning/drying apparatus, a CVD apparatus, a thin film formation apparatus, a CMP apparatus, a processing apparatus, an aging apparatus, and an inspection apparatus.

The semiconductor manufacturing apparatus-related apparatus preferably includes at least one selected from the group consisting of a pure water/chemical liquid apparatus, a gas apparatus, a clean room apparatus, and a manufacturing-related apparatus.

The photolithography process apparatus preferably includes at least one selected from the group consisting of a coating apparatus, a resist stripping apparatus, a developing apparatus (developer), and a descumming apparatus.

The thin film formation/etching/cleaning/drying apparatus preferably includes at least one selected from the group consisting of a vacuum deposition apparatus, a cleaning apparatus, a drying apparatus, and a scrub cleaning apparatus.

The inspection/evaluation and manufacturing apparatus is preferably a defect repair apparatus.

The resist processing apparatus preferably includes at least one selected from the group consisting of a coating apparatus, a developing apparatus, a resist stripping apparatus, and an ashing apparatus.

The etching apparatus preferably includes at least one selected from the group consisting of a dry etching apparatus and a wet etching apparatus.

The cleaning/drying apparatus preferably includes at least one selected from the group consisting of a wet cleaning apparatus, a scrub cleaning apparatus, and a drying apparatus.

The CVD apparatus preferably includes at least one selected from the group consisting of a high-pressure CVD apparatus, a SACVD apparatus, a low-pressure CVD apparatus, a plasma CVD apparatus, a metal CVD apparatus, and an ALD apparatus.

The thin film formation apparatus preferably includes at least one selected from the group consisting of a vacuum deposition apparatus, a silicon epitaxial growth apparatus, a compound semiconductor epitaxial apparatus (MOCVD apparatus, MBE apparatus), and a plating apparatus.

The CMP apparatus preferably includes at least one selected from the group consisting of a CMP apparatus and a CMP cleaning apparatus.

The processing apparatus is preferably a bump plating apparatus.

The aging apparatus preferably includes at least one selected from the group consisting of an aging apparatus, a burn-in apparatus, an IC insertion apparatus, and an IC extraction apparatus.

The inspection apparatus is preferably a life test apparatus.

The pure water/chemical liquid apparatus preferably includes at least one selected from the group consisting of a chemical supply apparatus, a slurry supply apparatus, a chemical purification apparatus, and a waste liquid treatment apparatus.

The gas apparatus preferably includes at least one selected from the group consisting of a gas generation apparatus, a gas purification apparatus, a gas mixing apparatus, a gas detection apparatus, and an exhaust gas treatment apparatus.

The clean room apparatus preferably includes at least one selected from the group consisting of a thermal chamber and an environmental test apparatus.

The manufacturing-related apparatus preferably includes at least one selected from the group consisting of a jig cleaning/drying apparatus, a flow control instrument, a packaging apparatus, and a liquid/gas measuring instrument.

It should be appreciated that a variety of modifications and changes in the structure and other details may be made to the aforementioned embodiments without departing from the spirit and scope of the claims.

### EXAMPLES

The disclosure is described in more detail below with reference to examples, but is not limited to these examples.

Physical properties were measured by the following methods.

### <Chemical resistance (corrosion resistance) test>

The resin sheets obtained in examples and comparative examples were each cut into a size of 10 mm × 50 mm × 2 mm, and used as a test piece.

The test piece was dried at 60°C for two hours.

After drying, the mass of the test piece before immersion was measured at room temperature (20°C).

The test piece after the measurement was immersed in each of the following chemical solutions (1) to (10) and held for one week (168 hours).

The test piece after the holding was washed with pure water, wiped to remove water droplets on the surface, and dried at 60°C for 12 hours. The mass of the test piece after the immersion was measured at room temperature (20°C).

The relative value of the mass after the immersion, with the mass before the immersion taken as 100, was calculated from the masses before and after the immersion.

The average and standard deviation of the masses (relative values) after the immersion for the 10 chemical solutions (1) to (10) were determined.

### (Chemical solutions)

(1) 25% by mass TMAH ([(CH₃)₄N]⁺[OH]⁻) (80°C);
(2) 98% by mass sulfuric acid (90°C), redox potential (vs. NHE): 1.1 V;
(3) 100% by mass isopropyl alcohol (80°C);
(4) 49% by mass hydrofluoric acid (70°C);
(5) a mixed acid of hydrofluoric acid and nitric acid (a mixture of 49% by mass hydrofluoric acid and 69 to 71% by mass nitric acid in a volume ratio of 1:5) (20°C);
(6) a mixed acid of hydrofluoric acid and nitric acid (a mixture of 49% by mass hydrofluoric acid and 69 to 71% by mass nitric acid in a volume ratio of 1:100) (20°C);
(7) SPM (a mixture of 98% by mass sulfuric acid and 30 to 36% by mass hydrogen peroxide water in a volume ratio of 2:1) (80°C), redox potential (vs. NHE): 1.8 V;
(8) SC1 (a mixture of 25 to 28% by mass ammonia water, 30 to 36% by mass hydrogen peroxide water, and deionized water in a volume ratio of 1:1:5) (70°C), redox potential (vs. NHE): 1.2 V;
(9) SC2 (a mixture of 35 to 37% by mass hydrochloric acid, 30 to 36% by mass hydrogen peroxide water, and deionized water in a volume ratio of 1:1:4) (70°C), redox potential (vs. NHE): 1.6 V; and
(10) 85% by mass phosphoric acid (80°C).

### <Change in appearance>

A change in color of the test piece before and after the immersion in each of the chemical solutions was evaluated based on the yellowness index (ΔYI). The change in appearance was evaluated by the number of chemical solutions in which ΔYI changed by 3 or more. The yellowness index was in conformity with JIS K 7373.

### <Deflection temperature under load>

The deflection temperature under load was measured in conformity with ASTM D648 at a load of 1.82 MPa.

### <Metal elution test>

The resin sheets obtained in examples and comparative examples were each cut into a size of 10 mm × 50 mm × 2 mm, and used as a test piece.

As pre-cleaning, the test piece was washed by immersion in 3.6% by mass hydrochloric acid for one hour, and then washed with running pure water. Then, the test piece was immersed in 100 mL of 3.6% by mass hydrochloric acid at 23°C. After one week (168 hours) from the start of the immersion, a portion of each immersion solution was collected, and the concentrations of 16 metal elements (Li, Na, Mg, Al, K, Ca, Ti, Cr, Mn, Fe, Ni, Cu, Zn, Ag, Cd, and Pb) were measured using ICP-MSI (Agilent 8900, available from Agilent Technologies, Inc.), and the measured values were used as the metal elution amounts.

The materials used in examples and comparative examples are listed below:

### (Resin)

LDPE: "NOVATEC LD LJ802" available from Japan Polyethylene Corporation, melting point: 106°C, heat of fusion: 100 J/g, density: 0.921 g/m³;
HDPE: "NOVATEC HD HJ360" available from Japan Polyethylene Corporation, melting point: 130°C, heat of fusion: 180 J/g, density: 0.951 g/m³;
Ultra high molecular weight PE: "LUBMER L4000" available from Mitsui Chemicals, Inc., melting point: 138°C, heat of fusion: 127 J/g, density: 0.967 g/m³;
PP: "NOVATEC PP MA3" available from Japan Polypropylene Corporation, melting point: 163°C, heat of fusion: 84 J/g, density: 0.90 g/m³;
PMP: "TPX RT31" available from Mitsui Chemicals, Inc., melting point: 232°C, heat of fusion: 42 J/g, density: 0.83 g/m³;
Amorphous COP: "ZEONEX T62R" available from Zeon Corporation, glass transition temperature: 154°C, density: 1.01 g/m³;
Crystalline COP: hydrogenated crystalline ring-opened polymer (syndiotactic hydrogenated crystalline dicyclopentadiene ring-opened polymer) synthesized as in Synthesis Example 1 described later;
PVC: "Vinika D7653" available from Mitsubishi Chemical Corporation, glass transition temperature: 72°C, density: 1.35 g/m³, chlorine content: 57% by mass;
PEEK: "VICTREX PEEK 450G" available from Victrex plc., melting point: 338°C, heat of fusion: 51 J/g, density: 1.30 g/m³;
PPS: "FZ-2100" available from DIC Corporation, melting point: 277°C, heat of fusion: 33 J/g, density: 1.34 g/m³; and
PEI: "Duratron U1000PEI" available from Mitsubishi Chemical Advanced Materials AG, glass transition temperature: 217°C, density: 1.27 g/m³.

### Synthesis Example 1 (Synthesis of crystalline COP)

### <Catalyst synthesis>

### (Synthesis of bis{3,3'-di(t-butyl)-5,5',6,6'-tetramethyl-2,2'-biphenoxy}phenylimido tungsten (VI))

A glass reactor equipped with a stirrer was charged with 5.80 g of tungsten phenylimido tetrachloride diethyl ether complex (W(=NPh)Cl₄(Et₂O)) and 60 mL of diethyl ether, and the contents were cooled to -78°C. Then, 8.38 g of 3,3'-di(t-butyl)-5,5',6,6'-tetramethyl-2,2'-biphenoxy lithium dissolved in 60 mL of diethyl ether was further added. The temperature of the mixture was gradually returned to room temperature, and reacted for 20 hours. After the reaction, diethyl ether was distilled off from the reaction mixture, and the residue was dissolved in a mixed solvent of toluene and hexane (weight ratio 1:3). The resulting white precipitate was removed by filtration with Celite, and the solvent was completely distilled off from the filtrate to obtain a red solid in 94% yield. The obtained solid was cooled to -30°C and allowed to recrystallize, thereby yielding a red needle-like microcrystalline solid. The yield of the obtained solid was 8.96 g (76% yield). This solid was identified as bis{3,3'-di(t-butyl)-5,5',6,6'-tetramethyl-2,2'-biphenoxy}phenylimido tungsten (VI) by ¹H-NMR, ¹³C-NMR, and elemental analysis.

### <Polymerization>

A glass reactor equipped with a stirrer was charged with 0.1112 g of bis{3,3'-di(t-butyl)-5,5',6,6'-tetramethyl-2,2'-biphenoxy}phenylimido tungsten (VI) obtained in Synthesis Example and 8 mL of toluene, and the contents were cooled to -78°C. Then, 0.01452 g of n-butyl lithium dissolved in 2 mL of hexane was further added. The temperature of the mixture was returned to room temperature, and reacted for 20 minutes. To the reaction mixture were added 15.0 g of dicyclopentadiene, 54 g of cyclohexane, and 0.64 g of 1-hexene, followed by polymerization reaction at 80°C. Immediately after the start of the polymerization reaction, a white precipitate was formed. After allowing the reaction to proceed for two hours, a large amount of acetone was added to the polymerization reaction solution to coagulate the precipitate. The precipitate separated by filtration was washed and dried under reduced pressure at 40°C for 24 hours. The yield of the resulting ring-opened polymer was 14.8 g and its number average molecular weight was 18000. Next, an autoclave equipped with a stirrer was charged with 6.0 g of the resulting ring-opened polymer and 95 g of cyclohexane. Then, 40.00314 g of RuHCl(CO)(PPh₃) dispersed in 20 mL of cyclohexane was further added, and a hydrogenation reaction was carried out at a hydrogen pressure of 4.0 MPa and 160°C for 12 hours. The hydrogenation reaction solution was poured into a large amount of acetone to completely precipitate the resulting hydrogenated ring-opened polymer. The precipitate separated by filtration was washed and dried under reduced pressure at 40°C for 24 hours. The degree of hydrogenation of the resulting hydrogenated ring-opened polymer was 99% or higher, and the proportion of racemo diads was 5% or less. The hydrogenated ring-opened polymer, after being dried under reduced pressure, was provided as a sample as it is. The melting point measured using the sample was 290°C. The hydrogenated ring-opened polymer, after being dried under reduced pressure, was sufficiently melted by heating at 300°C for 10 minutes, and then cooled to room temperature at a rate 10°C/min to allow sufficient crystallization. The resulting material was provided as a sample. The melting point measured using the sample was 289°C.

Analysis was performed by the following methods (1) to (4).

### (1) Number average molecular weight of ring-opened polymer

A ratio of the number of hydrogen atoms present at the polymer chain ends to the number of hydrogen atoms present in the polymer chain excluding the chain ends is determined based on the ¹H-NMR measurement. The number average molecular weight of the ring-opened polymer was calculated based on the ratio.

### (2) Degree of hydrogenation in hydrogenation reaction of ring-opened polymer

It was determined based on the ¹H-NMR measurement.

### (3) Melting point of hydrogenated crystalline ring-opened polymer

Measurement was performed using a differential scanning calorimeter while raising the temperature at a rate of 10°C/min.

### (4) Proportion of racemo diads in hydrogenated crystalline ring-opened polymer

The proportion of racemo diads was determined by ¹³C-NMR measurement at 150°C in which o-dichlorobenzene-d4 was used as a solvent. The determination was based on the intensity ratio between the signal derived from meso diads at 43.35 ppm and the signal derived from racemo diads at 43.43 ppm.

### Examples 1 to 4

Pellets of the resin shown in Table 1 were heat-melted by heat pressing at 220°C for 10 minutes and molded into a shape of 10 mm × 500 mm × 2 mm, followed by cooling to room temperature at a temperature decreasing rate of 10°C/min, whereby a resin sheet (member) was produced.

The resulting resin sheet was subjected to the chemical resistance test and evaluation on the change in appearance. Also, measurement of the deflection temperature under load and metal elution test were carried out. The results are shown in Table 1.

### Example 5

Pellets of the resin shown in Table 1 were heat-melted by heat pressing at 280°C for 10 minutes and molded into a shape of 10 mm × 500 mm × 2 mm, followed by cooling to room temperature at a temperature decreasing rate of 10°C/min, whereby a resin sheet (member) was produced. The resulting resin sheet was subjected to the chemical resistance test and evaluation on the change in appearance as in Examples 1 to 4. Also, measurement of the deflection temperature under load and the metal elution test were carried out. The results are shown in Table 1.

### Example 6

Pellets of the resin shown in Table 1 were heat-melted by heat pressing at 230°C for 10 minutes and molded into a shape of 10 mm × 500 mm × 2 mm, followed by cooling to room temperature at a temperature decreasing rate of 10°C/min, whereby a resin sheet (member) was produced. The resulting resin sheet was subjected to the chemical resistance test and evaluation on the change in appearance as in Examples 1 to 4. Also, measurement of the deflection temperature under load and the metal elution test were carried out. The results are shown in Table 1.

### Example 7

The crystalline COP obtained in Synthesis Example 1 was heat-melted by heating at 320°C for 10 minutes and molded into a shape of 10 mm × 500 mm × 2 mm, followed by cooling to room temperature at a temperature decreasing rate of 10°C/min, whereby a resin sheet (member) was produced. The resulting resin sheet was subjected to the chemical resistance test, evaluation on the change in appearance, measurement of the deflection temperature under load, and the metal elution test as in Examples 1 to 4. The results are shown in Table 1.

### Example 8

Pellets of the resin shown in Table 1 were heat-melted by heat pressing at 180°C for 10 minutes and molded into a shape of 10 mm × 500 mm × 2 mm, followed by cooling to room temperature at a temperature decreasing rate of 10°C/min, whereby a resin sheet (member) was produced. The resulting resin sheet was subjected to the chemical resistance test, evaluation on the change in appearance, and measurement of the deflection temperature under load as in Examples 1 to 4. The results are shown in Table 1.

### Comparative Examples 1 and 3

Pellets of the resin shown in Table 1 were heat-melted by heat pressing at 350°C for 10 minutes and molded into a shape of 10 mm × 500 mm × 2 mm, followed by cooling to room temperature at a temperature decreasing rate of 10°C/min, whereby a resin sheet (member) was produced. The resulting resin sheet was subjected to the chemical resistance test and evaluation on the change in appearance as in Examples 1 to 4. The results are shown in Table 1.

### Comparative Example 2

Pellets of the resin shown in Table 1 were heat-melted by heat pressing at 300°C for 10 minutes and molded into a shape of 10 mm × 500 mm × 2 mm, followed by cooling to room temperature at a temperature decreasing rate of 10°C/min, whereby a resin sheet (member) was produced. The resulting resin sheet was subjected to the chemical resistance test and evaluation on a change in appearance as in the cases of Examples 1 to 4. The results are shown in Table 1.

**[Table 1]**

| | | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|---|
| Resin type | | LDPE | HDPE | Ultra high molecular weight PE | PP | PMP | Amorphous COP | Crystalline COP | PVC | PEEK | PPS | PEI |
| Chemical resistance test (Mass (relative value) after immersion with mass before immersion taken as 100) | TMAH (25%, 80°C) | 100 | 100 | 100 | 100 | 100 | 100 | 100 | 100 | 100 | 100 | 0 |
| | H2SO4 (98%, 90°C) | 121 | 102 | 102 | 100 | 100 | 101 | 101 | 103 | 100 | 100 | 0 |
| | IPA (80°C) | 101 | 101 | 101 | 103 | 105 | 100 | 100 | 104 | 100 | 100 | 99 |
| | HF (49%, 70°C) | 100 | 100 | 100 | 100 | 100 | 100 | 100 | 101 | 100 | 100 | 104 |
| | HF/HNO3 = 1/5 (20°C) | 100 | 100 | 100 | 100 | 100 | 100 | 100 | 100 | 131 | 151 | 110 |
| | HF/HNO3 = 1/100 (20°C) | 100 | 100 | 100 | 100 | 100 | 100 | 100 | 100 | 45 | 0 | 120 |
| | SPM (80°C) | 96 | 100 | 100 | 99 | 99 | 99 | 100 | 100 | 82 | 95 | 96 |
| | SC1 (70°C) | 100 | 100 | 100 | 100 | 100 | 100 | 100 | 103 | 100 | 100 | 99 |
| | SC2 (70°C) | 100 | 100 | 100 | 100 | 100 | 100 | 100 | 100 | 100 | 100 | 100 |
| | H3PO4 (85%, 80°C) | 100 | 100 | 100 | 100 | 100 | 100 | 100 | 100 | 100 | 100 | 100 |
| | Average value | 102 | 100 | 100 | 100 | 101 | 100 | 100 | 101 | 96 | 95 | 83 |
| | Standard deviation | 6.6 | 0.6 | 0.6 | 0.9 | 1.5 | 0.3 | 0.2 | 1.4 | 20.1 | 35.1 | 42.0 |
| Change in appearance (color) | | 3 | 3 | 1 | 4 | 1 | 1 | 1 | 2 | 5 | 4 | 4 |
| Deflection temperature under load at 1.82 MPa (°C) | | 54 | 67 | 70 | 73 | 90 | 132 | 140 | 64 | - | - | - |
| Metal elution test (ppb) | Li | < 0.1 | < 0.1 | < 0.1 | < 0.1 | < 0.1 | < 0.1 | < 0.1 | - | - | - | - |
| | Na | < 0.1 | <0.1 | < 0.1 | < 0.1 | < 0.1 | < 0.1 | < 0.1 | - | - | - | - |
| | Mg | < 0.1 | < 0.1 | < 0.1 | 0.2 | < 0.1 | < 0.1 | < 0.1 | - | - | - | - |
| | Al | 2.2 | 1.7 | 1.7 | 5.1 | 0.5 | 1.6 | 0.9 | - | - | - | - |
| | K | < 0.1 | < 0.1 | < 0.1 | < 0.1 | < 0.1 | < 0.1 | < 0.1 | - | - | - | - |
| | Ca | 0.2 | 0.2 | 0.2 | 0.3 | 0.2 | < 0.1 | < 0.1 | - | - | - | - |
| | Ti | < 0.1 | < 0.1 | < 0.1 | < 0.1 | < 0.1 | < 0.1 | < 0.1 | - | - | - | - |
| | Cr | < 0.1 | < 0.1 | < 0.1 | < 0.1 | < 0.1 | < 0.1 | < 0.1 | - | - | - | - |
| | Mn | < 0.1 | < 0.1 | < 0.1 | < 0.1 | < 0.1 | < 0.1 | < 0.1 | - | - | - | - |
| | Fe | 0.8 | 0.3 | 0.2 | 0.5 | <0.1 | 0.1 | 0.1 | - | - | - | - |
| | Ni | < 0.1 | < 0.1 | < 0.1 | < 0.1 | < 0.1 | < 0.1 | < 0.1 | - | - | - | - |
| | Cu | < 0.1 | < 0.1 | < 0.1 | < 0.1 | < 0.1 | < 0.1 | < 0.1 | - | - | - | - |
| | Zn | < 0.1 | < 0.1 | < 0.1 | < 0.1 | < 0.1 | < 0.1 | < 0.1 | - | - | - | - |
| | Ag | < 0.1 | < 0.1 | < 0.1 | < 0.1 | < 0.1 | < 0.1 | < 0.1 | - | - | - | - |
| | Cd | < 0.1 | < 0.1 | < 0.1 | < 0.1 | < 0.1 | < 0.1 | < 0.1 | - | - | - | - |
| | Pb | < 0.1 | < 0.1 | < 0.1 | < 0.1 | < 0.1 | < 0.1 | < 0.1 | - | - | - | - |
| Weight average molecular weight | | 130,000 | 190,000 | 1,500,000 | 280,000 | 430,000 | 23,000 | 18,000* | - | - | - | - |

| | | | | | | | | | | | | |
|---|---|---|---|---|---|---|---|---|---|---|---|---|
| *Number average molecular weight calulated by NMR method | | | | | | | | | | | | |

The members of the examples were suitable for use as members (parts) in a semiconductor manufacturing-related apparatus in which a chemical is used.

## Claims

1. A member comprising at least one thermoplastic resin selected from the group consisting of a polyolefin resin and a chlorine-based resin,
the member including at least one selected from the group consisting of an architectural finishing material member, a mobility member, an aerospace member, a semiconductor member, and an information and communication member,
the member coming into contact with a corrosive substance.

2. The member according to claim 1,
wherein the thermoplastic resin has crystallinity.

3. The member according to claim 1 or 2,
wherein the polyolefin resin includes at least one selected from the group consisting of a polyethylene resin, a polypropylene resin, an amorphous cycloolefin resin, a crystalline cycloolefin resin, and a polymethylpentene resin.

4. The member according to any one of claims 1 to 3,
wherein the chlorine-based resin includes at least one selected from the group consisting of a vinyl chloride resin, a chlorinated vinyl chloride resin, and a chlorinated polyethylene resin.

5. The member according to any one of claims 1 to 4,
wherein the thermoplastic resin includes at least one selected from the group consisting of a polyethylene resin, a polypropylene resin, an amorphous cycloolefin resin, a crystalline cycloolefin resin, a polymethylpentene resin, and a vinyl chloride resin.

6. The member according to any one of claims 1 to 4,
wherein the thermoplastic resin includes at least one selected from the group consisting of a polypropylene resin, an amorphous cycloolefin resin, a crystalline cycloolefin resin, and a polymethylpentene resin.

7. The member according to any one of claims 1 to 6,
wherein the member includes at least one selected from the group consisting of a container, a piping material, a nozzle, a tube, a tank, a fitting, a valve, a pump, a spin chuck, an O-ring, a packing, a gasket, a washer, and a sealing material.

8. The member according to any one of claims 1 to 7,
wherein the thermoplastic resin includes at least one selected from the group consisting of a polypropylene resin, an amorphous cycloolefin resin, a crystalline cycloolefin resin, and a polymethylpentene resin, and the member includes at least one selected from the group consisting of a container, a piping material, a nozzle, a tube, a tank, a fitting, a valve, a pump, a spin chuck, an O-ring, a packing, a gasket, a washer, and a sealing material.

9. The member according to any one of claims 1 to 8,
wherein the corrosive substance has a pH of 6 or lower or 8 or higher.

10. The member according to any one of claims 1 to 9,
wherein the corrosive substance has a redox potential (vs. NHE) of -2.0 to 3.0 V.

11. The member according to any one of claims 1 to 10,
wherein the corrosive substance includes at least one selected from the group consisting of an acidic substance, a basic substance, an oxidizing substance, an organic solvent, and salt water.

12. The member according to claim 11,
wherein the acidic substance includes at least one selected from the group consisting of sulfuric acid, hydrofluoric acid, nitric acid, phosphoric acid, hydrochloric acid, a mixed acid of hydrofluoric acid and nitric acid, a mixed chemical solution of hydrogen peroxide water and hydrochloric acid, and a mixed chemical solution of hydrogen peroxide water and sulfuric acid.

13. The member according to claim 11 or 12,
wherein the basic substance includes at least one selected from the group consisting of TMAH ([(CH₃)₄N]⁺[OH]⁻), an aqueous sodium hydroxide solution, ammonia water, and a mixed chemical solution of hydrogen peroxide water and ammonia water.

14. The member according to any one of claims 1 to 13,
wherein the corrosive substance includes at least one selected from the group consisting of sulfuric acid, hydrofluoric acid, nitric acid, phosphoric acid, hydrochloric acid, a mixed acid of hydrofluoric acid and nitric acid, a mixed chemical solution of hydrogen peroxide water and hydrochloric acid, a mixed chemical solution of hydrogen peroxide water and sulfuric acid, TMAH ([(CH₃)₄N]⁺[OH]⁻), an aqueous sodium hydroxide solution, a mixed chemical solution of hydrogen peroxide water and ammonia water, and isopropyl alcohol.

15. The member according to any one of claims 1 to 14,
wherein the member is for a semiconductor manufacturing-related apparatus.

16. The member according to claim 15,
wherein the semiconductor manufacturing-related apparatus is an apparatus in which a chemical is used.

17. The member according to any one of claims 1 to 16,
wherein when a test piece (size: 10 mm × 50 mm × 2 mm) including the member is immersed in each of the following three chemical solutions for one week, a relative value of a mass of the test piece after the immersion, with a mass before the immersion taken as 100, is 95 or more and 105 or less for all the three chemical solutions:
(chemical solutions)
25% by mass TMAH ([(CH₃)₄N]⁺[OH]⁻) (80°C);
a mixed acid of hydrofluoric acid and nitric acid (a mixture of 49% by mass hydrofluoric acid and 69 to 71% by mass nitric acid in a volume ratio of 1:100) (20°C); and
SPM (a mixture of 98% by mass sulfuric acid and 30 to 36% by mass hydrogen peroxide water in a volume ratio of 2:1) (80°C).

18. The member according to any one of claims 1 to 17,
wherein when a test piece (size: 10 mm × 50 mm × 2 mm) including the member is immersed in each of the following 10 chemical solutions for one week and a relative value of a mass of the test piece after the immersion, with a mass before the immersion taken as 100, is measured for each chemical solution, an average of the relative values for the 10 chemical solutions is 95 or more and 105 or less, and a standard deviation thereof is 20 or less:
(chemical solutions)
25% by mass TMAH ([(CH₃)₄N]⁺[OH]⁻) (80°C);
98% by mass sulfuric acid (90°C);
100% by mass isopropyl alcohol (80°C);
49% by mass hydrofluoric acid (70°C);
a mixed acid of hydrofluoric acid and nitric acid (a mixture of 49% by mass hydrofluoric acid and 69 to 71% by mass nitric acid in a volume ratio of 1:5) (20°C);
a mixed acid of hydrofluoric acid and nitric acid (a mixture of 49% by mass hydrofluoric acid and 69 to 71% by mass nitric acid in a volume ratio of 1:100) (20°C);
SPM (a mixture of 98% by mass sulfuric acid and 30 to 36% by mass hydrogen peroxide water in a volume ratio of 2:1) (80°C);
SC1 (a mixture of 25 to 28% by mass ammonia water, 30 to 36% by mass hydrogen peroxide water, and deionized water in a volume ratio of 1:1:5) (70°C);
SC2 (a mixture of 35 to 37% by mass hydrochloric acid, 30 to 36% by mass hydrogen peroxide water, and deionized water in a volume ratio of 1:1:4) (70°C); and
85% by mass phosphoric acid (80°C).

19. The member according to any one of claims 1 to 18,
wherein the member has a deflection temperature under load of 50°C or higher at a load of 1.82 MPa.

20. The member according to any one of claims 1 to 19,
wherein when a test piece (size: 10 mm × 50 mm × 2 mm) including the member is immersed in 3.6% by mass hydrochloric acid at 23°C for one week, an elution amount of each of 16 metal elements (Li, Na, Mg, Al, K, Ca, Ti, Cr, Mn, Fe, Ni, Cu, Zn, Ag, Cd, and Pb) is 20 ppb or less.

21. A semiconductor manufacturing-related apparatus comprising the member according to any one of claims 1 to 20 mounted thereon.

22. The semiconductor manufacturing-related apparatus according to claim 21, which includes at least one selected from the group consisting of a semiconductor manufacturing apparatus and a semiconductor manufacturing apparatus-related apparatus.

23. The semiconductor manufacturing-related apparatus according to claim 22,
wherein the semiconductor manufacturing apparatus includes at least one selected from the group consisting of a photolithography process apparatus, a thin film formation/etching/cleaning/drying apparatus, an inspection/evaluation and manufacturing apparatus, a resist processing apparatus, an etching apparatus, a cleaning/drying apparatus, a CVD apparatus, a thin film formation apparatus, a CMP apparatus, a processing apparatus, an aging apparatus, and an inspection apparatus; and
the semiconductor manufacturing apparatus-related apparatus includes at least one selected from the group consisting of a pure water/chemical liquid apparatus, a gas apparatus, a clean room apparatus, and a manufacturing-related apparatus.

24. The semiconductor manufacturing-related apparatus according to claim 23,
wherein the photolithography process apparatus includes at least one selected from the group consisting of a coating apparatus, a resist stripping apparatus, a developing apparatus (developer), and a descumming apparatus;
the thin film formation/etching/cleaning/drying apparatus includes at least one selected from the group consisting of a vacuum deposition apparatus, a cleaning apparatus, a drying apparatus, and a scrub cleaning apparatus;
the inspection/evaluation and manufacturing apparatus is a defect repair apparatus,
the resist processing apparatus includes at least one selected from the group consisting of a coating apparatus, a developing apparatus, a resist stripping apparatus, and an ashing apparatus;
the etching apparatus includes at least one selected from the group consisting of a dry etching apparatus and a wet etching apparatus;
the cleaning/drying apparatus includes at least one selected from the group consisting of a wet cleaning apparatus, a scrub cleaning apparatus, and a drying apparatus;
the CVD apparatus includes at least one selected from the group consisting of a high-pressure CVD apparatus, a SACVD apparatus, a low-pressure CVD apparatus, a plasma CVD apparatus, a metal CVD apparatus, and an ALD apparatus;
the thin film formation apparatus includes at least one selected from the group consisting of a vacuum deposition apparatus, a silicon epitaxial growth apparatus, a compound semiconductor epitaxial apparatus (MOCVD apparatus, MBE apparatus), and a plating apparatus;
the CMP apparatus includes at least one selected from the group consisting of a CMP apparatus and a CMP cleaning apparatus;
the processing apparatus is a bump plating apparatus;
the aging apparatus includes at least one selected from the group consisting of an aging apparatus, a burn-in apparatus, an IC insertion apparatus, and an IC extraction apparatus;
the inspection apparatus is a life test apparatus,
the pure water/chemical liquid apparatus includes at least one selected from the group consisting of a chemical supply apparatus, a slurry supply apparatus, a chemical purification apparatus, and a waste liquid treatment apparatus;
the gas apparatus includes at least one selected from the group consisting of a gas generation apparatus, a gas purification apparatus, a gas mixing apparatus, a gas detection apparatus, and an exhaust gas treatment apparatus;
the clean room apparatus includes at least one selected from the group consisting of a thermal chamber and an environmental test apparatus; and
the manufacturing-related apparatus includes at least one selected from the group consisting of a jig cleaning/drying apparatus, a flow control instrument, a packaging apparatus, and a liquid/gas measuring instrument.
